# EUROPEAN PATENT SPECIFICATION

(11) **EP 0 357 280 B1**
(45) Date of publication and mention of the grant of the patent: **28.02.1996**
(21) Application number: 89308219.8
(22) Date of filing: 14.08.1989
(51) Int. Cl.: C08G 63/688, C11D 3/07, C07C 309/05

(54) **Soil release agents having allylderived sulfonated end caps**
Schmutzabweisende Mittel mit von Allylgruppen abgeleiteten sulphonierten Endgruppen
Agents antisalissures ayant des groupes terminaux sulfonés dérivés de groupes allyliques

(30) Priority: 26.08.1988 US 237598
(43) Date of publication of application: 07.03.1990
(73) Proprietor: THE PROCTER & GAMBLE COMPANY, Cincinnati, Ohio 45202 (US)
(72) Inventor: Scheibel, Jeffrey John, Cincinnati Ohio 45242 (US); Gosselink, Eugene Paul, Cincinnati Ohio 45251 (US)
(74) Representative: Brooks, Maxim Courtney

(56) References cited:
- EP-A- 0 155 710
- EP-A- 0 274 907
- JOURNAL OF ORGANIC CHEMISTRY, vol. 33, no. 11, November 1967, pages 4158-4165; C.J. NORTON et al.: "Alkanesulfonate synthesis. I. Ion catalysis of sulfite radical-ion addition to olefins"

## Description

### TECHNICAL FIELD

The present invention relates to novel soil release agents, which are ester oligomers of a kind which may readily be formulated into laundry products such as laundry detergents or fabric conditions. Thus formulated, they are suitable for use in a home laundry operation. Effective, renewable soil release treatment of fabrics is provided.

Preparation of the novel soil release agents involves ester chemistry and, in the preferred embodiments, radical-initiated sulfonation chemistry designed to produce substantially linear, relatively low molecular weight terephthalate ester oligomers having end-capping moieties each comprising disulfonate or sulfinate-sulfonate.

### BACKGROUND OF THE INVENTION

A substantial proportion of synthetic fabrics now in use are copolymers of ethylene glycol and terephthalic acid, sold under trade names which include DACRON, FORTREL and BLUE C POLYESTER. The removal of oily soil and oily stains, which are hydrophobic, from the surfaces of such fabrics, which are likewise hydrophobic in character, is well recognized to be technically difficult to achieve using laundry compositions of the type most generally accessible to consumers.

It has been recognized in the art that the provision of substances which attach to the surfaces of polyester fabrics and render them more hydrophilic in character is helpful in achieving improved oily soil and oily stain release from such fabrics. Substances which have been used in consumer products as soil release agents are generally copolymers of moderately high (e.g., 40,000 to 50,000) molecular weight, containing ethylene terephthalate segments randomly interspersed with polyethylene glycol segments. See, for example, U.S. Pat. No. 3,962,152, Nicol et al, issued June 8, 1976; a soil release polyester of this type, commercially known as MILEASE T, is further disclosed in U.S. Pat. No. 4,116,885, Derstadt et al, issued Sept. 7, 1978; other commercial variants are PERMALOSE and ZELCON (see Canadian Pat. No. 1,100,262, Becker et al, issued May 5, 1981 and U.S. Pat. No. 4,238,531, Rudy et al, issued Dec. 9, 1980).

The development of new soil release agents delivering technically outstanding soil release performance cost-effectively in consumer laundering and fabric care compositions is not straightforward. To be particularly useful, efficient adsorption and surface coverage of polyester fabric surfaces by the soil release agent must occur, with minimum interference from the product matrix which is being used as a vehicle to convey the soil release agent to the fabric surface. Matrix interferences, when they occur, not only decrease the effectiveness of the soil release agent, but also reduce the cleaning, softening and/or antistatic benefits of other ingredients which may also be present in the product. Formulability of the soil release agent is also a major consideration, since the limited solubility and/or dispersibility of art-taught polyesters frequently imposes serious constraints on the range of formulations into which the soil release agent may stably be introduced. Such challenges are generally absent from compositions used in industrial textile treatments, but are well-known to manufacturers of fully-formulated consumer products.

Various materials, especially the oligomeric anionic end-capped esters described by Gosselink in U.S. Patent 4,721,580, issued January 26, 1988, have been disclosed for use as soil release agents. Thus, useful and relevant background can be drawn from a reading of polyester chemistry, for example as summarized in the background portion of the Gosselink patent.

Gosselink goes on to describe particular oligomeric esters which are useful as soil release agents in laundry products. The ester compositions provided by Gosselink encompass substantially linear ester oligomers which have one or two monosulfonated end-caps, as illustrated by Q˝-{-Z-O-R-O}_{y}H and {Q-Z-O-R-O}ₓZ-Q′ respectively, wherein Z is terephthaloyl, R is 1,2-propylene and each of the groups Q, Q′ and Q˝ is MO₃S(L)(CH₂CH₂O)ᵣ₋ or MO₃S(CH₂CH₂O)ᵣ₋. L is C₁-C₆ alkoxy, M is a metal cation and x and y are consistent with oligomers of low molecular weight.

The syntheses of the Gosselink esters are likely to be rather expensive, at least inasmuch as those specifically illustrated rely on reactive chlorinated starting materials known to be corrosive and difficult to handle.

Gosselink has also provided other oligomeric ester soil release agents; see, for example, U.S. Patents 4,702,857, issued October 27, 1987; 4,711,730 issued December 8, 1987; and 4,713,194, issued February 15, 1987. These soil release agents, like those of the '580 patent, contain terephthalate, but have nonionic, i.e., uncharged, capping groups.

Utility of the foregoing oligomeric ester materials as soil release agents in laundry products notwithstanding, the search for improved soil release agents has continued, in view of an ongoing need to further improve the economics, soil release properties and formulability of the soil release agents in specific laundry product matrices.

Soil release agents having allyl-derived or methallyl-derived end-caps are not apparently known in the art. At the outset of the work now described, such incorporation appeared, in chemical terms, to represent a difficult goal. Thus, sulfonating a simple olefin, having only one reactive group, and sulfonating an ester oligomer, containing several different, potentially reactive groups, are two very different matters. Also, it was unclear whether any soil release benefit might result, or whether instead the sulfonated ester would then be less effective (e.g., overly soluble and not inclined to deposit on fabrics).

In view of the foregoing, it would be desirable to provide improved soil-release ester oligomers.

It is an object of the present invention to provide such materials, structurally altered especially in the composition of the end-caps.

It is a further object of the invention to provide useful oligomeric ester compositions comprising the novel oligomers in admixture with other soil-release effective esters, such as the monosulfonate end-capped esters specifically disclosed by Gosselink or obvious variants thereof.

It is yet another object of the invention to provide useful syntheses of the soil-releasing ester oligomer compositions.

### BACKGROUND ART

S. C. Bright, C. E. Stubbs and L. Thompson, J. Appl. Chem. Biotechnol., 1975, Vol. 25, pages 901-912, disclose radical-initiated sulfonation of ether-bond free linear olefins, i.e., olefinic hydrocarbons such as 1-dodecene, to simultaneously form alkane monosulfonates, alkane sulfinate-sulfonates and alkane disulfonates. Sodium metabisulfite is reacted with the linear olefin in a mixed solvent system comprising water and isopropanol. The alkane sulfinate-sulfonate is referred to as undesirable and it is stated that the level of this material can be controlled by adjusting the pH of the reaction. It is further disclosed that "in practice, the rate of sulfitation decreases rapidly as the sulfitation pH rises above 7.0." Also, "the solubility of the olefin in the aqueous isopropanol is adversely affected by the increasing levels of sodium sulfite present" and "sodium sulfite tends to cause separation of sulfitation reaction mixtures into an aqueous phase containing sulfite and bisulfite and an isopropanol phase containing the olefin".

U.S. Patent 4,588,534, Shepherd, Jr. et al, issued May 13, 1986, discloses an ether sulfinate-sulfonate or disulfonate having the formula ROCH₂C(SO₂M)(Z)CH₂SO₃M or ROCH₂C(SO₃M)(Z)CH₂SO₃M, or a mixture of ROCH₂CH(Z)CH₂SO₃M and ROCH₂C(SO₂M)(Z)CH₂SO₃M, or a mixture of ROCH₂CH(Z)CH₂SO₃M and ROCH₂C(SO₃M)(Z)CH₂SO₃M; wherein R is a hydrocarbon group having from about 6 to about 24 carbon atoms, Z is hydrogen or a methyl group and M is an alkali metal, alkylammonium or ammonium cation. The compositions are useful as a foaming agent and enhanced oil recovery surfactant. The most preferred compositions are prepared by reacting a linear primary alcohol with a chlorinated compound, specifically allyl chloride, to form an alkyl allyl ether; this ether is then reacted with sulfur dioxide and sodium hydroxide in a solvent such as isopropyl alcohol/water in the presence of suitable catalyst such as t-butyl perbenzoate, to form a mixture of alkyl allyl ether sulfinates and sulfonates.

U. S. Patent 4,303,774, Nachtkamp et al, issued December 1, 1981, is directed to the manufacture of improved polyurethane elastomers which are soluble or dispersible in water, have a substantially linear molecular structure and contain both ethylene oxide units (built into polyether chains) and sulfonate groups. These elastomers contain from about 0.5%-20% by weight of ethylene oxide-derived units arranged within polyether chains and from about 0.1-25 milliequivalents, per 100g of solids content, of sulfonate groups of the formula -SO₃- in the form of structural units corresponding to the following formula: -O-X-R, arranged in end positions and/or side chains. In the Nachtkamp et al formulae, X is a polyalkylene oxide chain having from 5-90 chain members, at least about 40% of which are ethylene oxide units; and R is a monovalent hydrocarbon group having from 3-18 carbon atoms and containing at least one sulfonate group SO₃-. Examples 1 and 2 show preparation of a polyether monohydric alcohol containing sulfonate groups derived from allyl alcohol; other Examples include Example 3, wherein under particular conditions and in particular proportions, the following are reacted: polyester of adipic acid and butanediol, polyether monohydric alcohol containing sulfonate groups, trimethylol propane, isophorone diisocyanate, acetone, isophorone diamine, hydrazine hydrate and water.

Norton et al, J. Org. Chem., Vol 33, No. 11, pp 4158-4165 (1967) disclose extensive studies of solvent, catalyst cation and catalyst anion effects in the ion catalysis of sulfite radical-ion addition to olefins.

Fock et al, U.S. Patent 4,598,141, issued July 1, 1986, describe a process for the preparation of polyesters with improved dye affinity. This involves reacting a dicarboxylic acid with a mixture of diols. The diol mixture used comprises a major portion of an alkylene glycol and a minor portion of a polyalkylene ether having the formula R¹CH₂O-(C₂H₄O-)ₙ(C₃H₇O-)ₘCH₂CHR³CH₂-SO₃X wherein R¹ is HO-CH₂CH(OH)- or HOH₂CC(R)(CH₂OH)- wherein R is methyl, ethyl or propyl; R³ is H- or methyl; X is H-, alkali or ammonium ion, n is from 0 to 100, m is from 0 to 50 and n+m is not less than 1. To prepare the sulfonated compound, radical addition of HSO₃X in the presence of catalysts to compounds having the following formula: R¹CH₂O-(C₂H₄O-)ₙ(C₃H₇O-)ₘCH₂CHR³=CH₂ is disclosed.

Pierce et al, U.S. Patent 4,299,743, issued November 10, 1981, describe a linear or branched polymer, containing a plurality of organic sulfonate-containing groups, which is capable of being dissolved or dispersed in a liquid medium. The polymer is useful as a pigment dispersant and as film-forming polymer in coating compositions, and invariably contains at least one sulfonate-containing group: -C(O)-C(R¹)HC(R)(R³)(SO₃)⁻M⁺ wherein R¹, R and R³ are each individually hydrogen or a monovalent organic group having a molecular weight in the range from 15 to about 250; and M⁺ is a monovalent cation or a monovalent fractional part of a polyvalent cation, which is associated with the -SO₃ ⁻ portion of the organic sulfonate group. The sulfonation is introduced by post-sulfonating an ethylenically unsaturated preformed intermediate polymer using bisulfite salt, metabisulfite salt or mixtures or precursors of such salts. The preformed intermediate polymer has numerous illustrations, including polyesters derived from propylene glycol or prepared using dibutyl tin oxide or similar catalysts.

Schmitt, EP-A 155,710, published September 25, 1985, discloses alkyoxypolyethoxypropane sulfonates of the general formula RY(C₂H₄O)ₓCH₂CH₂CH₂SO₃Na in which R is alkyl or alkaryl, Y is O or S and x is from 0 to 20. These compositions are prepared by a two-stage procedure in which the polyethoxylated alcohol or thiol RY(C₂H₄O)ₓH is reacted with allyl halide or tosylate in the presence of strong aqueous NaOH and some final product as phase transfer agent; the resulting allyl ether intermediate is sulfonfated in situ with bisulfite.

Hodgson et al, EP-A 180,356, published May 7, 1986, describes preparation of alkyl, aryl, or alkylaryloxy halides by reacting the corresponding alkoxy alcohol with a halogenating agent, e.g., thionyl chloride, in the presence of a quaternary ammonium compound as catalyst. The catalyzed reaction apparently improves yield and reduces the tendency of the polyoxyalkylene chain to cleave.

Ballschuh et al, U.S. Patent 4,687,602, issued August 18, 1987, discloses sulfonates, sulfinates, disulfonates and mixed sulfinate-sulfonates derived by reacting allyl amine derivatives, such as dimethylallylamine hydrochloride, with NaHSO₃ at pH range 2-4, in the presence of peroxodisulfate. The reaction is initiated by FeSO₄, resulting in a high proportion of sulfinate-sulfonate, which can in turn be converted to the disulfonate using hydrogen peroxide. The products are characterized as betaine-type surfactants.

Duddey et al, U.S. Patent 3,821,169, issued June 28, 1974, disclose a method for preparing cationically dyeable highly polymeric linear polyester and copolyester resins which comprises adding to a multi-step polyester or copolyester forming process at least one compound selected from the group consisting of hydroxyalkylene oxide and hydroxypoly(alkylene oxide) derivatives of metallic salts of isethionic acid.

Login, U.S. Patent 4,156,073, issued May 22, 1979, discloses branched (e.g., prepared in the presence of trimellitic anhydride) water-dispersible polyester size compositions which incorporate reaction product of an aromatic polycarboxylic acid anhydride and an aliphatic or cycloaliphatic hydroxysulfonic acid alkali metal salt.

Although the soil-release agents described herein are not classical "polyesters" in the sense of having the structure of ester high polymers, resins or fibers, they can be termed polyesters in the somewhat more restricted sense that a plurality of ester-bond interconnected groups is present.

### SUMMARY OF THE INVENTION

In its preferred embodiments, the present invention provides novel sulfonated terephthalate ester oligomers which are useful soil release agents for use in laundry products. The esters generally contain a high proportion of free-radical-sulfonated-allyl or free-radical-sulfonated-methallyl end-caps. The preferred allyl-derived end-caps are:

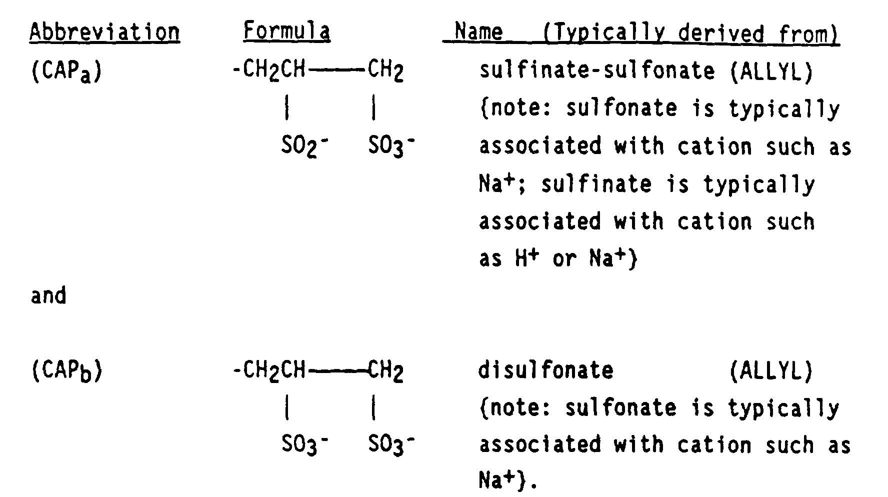

In the above, the disulfonate end-cap (CAP_{b}) is especially preferred.

In general, varying proportions of the following monosulfonate end-cap can also be present:

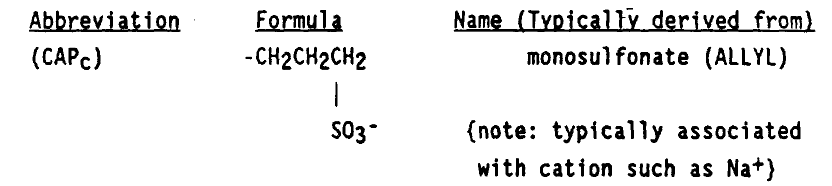

It is part of the instant invention to provide methods for maximizing the relative proportions of (CAPₐ) and (CAP_{b}) substituted terephthalate esters relative to (CAP_{c}) substituted terephthalate esters.

Allyl groups, which are present in the esters prior to sulfonation, are represented herein as follows:

| Abbreviation | Formula | Name (Typically derived from) |
|---|---|---|
| (ALLYL) | -CH₂-CH=CH₂ | allyl (allyl alcohol) |

The methallyl homolog, typically derived from methallyl alcohol, is also within the scope of the invention; in contrast, higher olefins, higher branched olefins and the like are unsuitably hydrophobic.

The terephthalate ester oligomers herein have substantially linear backbones; thus they do not, in general, include branching or crosslinking tri- or polyvalent monomer groups such as tri-, tetra, or poly-carboxylic acid monomer groups, or tri-, tetra- or polyhydric alcohol monomer groups.

In the preferred embodiment, the linear backbone of the sulfonated, end-capped terephthalate esters of the invention is comprised of alternating groups of the formulae :

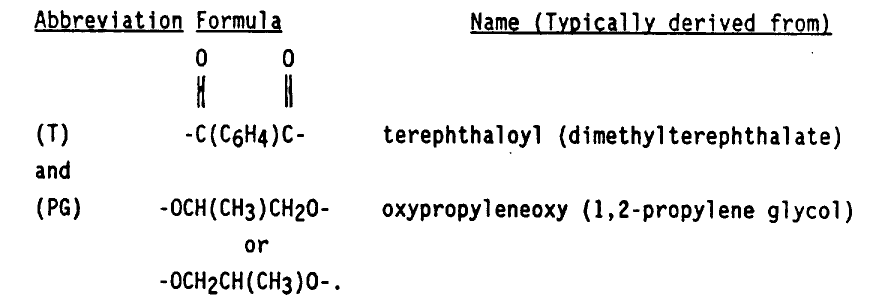

Furthermore, the sulfonated ester oligomers will generally contain nonionic hydrophile units, especially:

| Abbreviation | Formula | Name (Typically derived from) |
|---|---|---|
| (Eₙ) | -O(CH₂CH₂O)ₙ₋₁CH₂CH₂O- | poly(oxyethylene)oxy (ethylene oxide) |

Importantly, in the preferred embodiment, such nonionic hydrophile units are found substantially situated in particular positions betwen the end-caps and the backbone, rather than interrupting the backbone structure. Thus, at the molecular level, the following are illustrative of the most highly preferred structures:
(CAPₐ)-(Eₙ)-(T)-(PG)-(T)-(PG)-(T)-(PG)-(T)-(Eₙ)-(CAPₐ)
(CAPₐ)-(Eₙ)-(T)-(PG)-(T)-(PG)-(T)-(PG)-(T)-(Eₙ)-(CAP_{b})
(CAP_{b})-(Eₙ)-(T)-(PG)-(T)-(PG)-(T)-(PG)-(T)-(Eₙ)-(CAP_{b})
All of the foregoing structures correspond with sulfonated esters which contain a total of four sulfonate or sulfinate groups; in contrast, the following structures, having only three sulfonate or sulfinate groups in total, are less preferred:
(CAPₐ)-(Eₙ)-(T)-(PG)-(T)-(PG)-(T)-(PG)-(T)-(Eₙ)-(CAP_{c})
(CAP_{b})-(Eₙ)-(T)-(PG)-(T)-(PG)-(T)-(PG)-(T)-(Eₙ)-(CAP_{c})
Also, least desirably as noted supra, material having only monosulfonate terminal units can be present:
(CAP_{c})-(Eₙ)-(T)-(PG)-(T)-(PG)-(T)-(PG)-(T)-(Eₙ)-(CAP_{c})

Note that the backbone, which in the above-illustrated structures is given by: -(T)-(PG)-(T)-(PG)-(T)-(PG)-(T)-, can have varying lengths. The most highly preferred average backbone length, in terms of the number of terephthaloyl repeat units (T), is in the range from 1 to 7. In referring to such an average backbone compositions hereinafter, the abbreviation -{B}-is used.

More generally, the backbone can incorporate repeat units such as the following, to a limited extent:

| Abbreviation | Formula | Name (Typically derived from) |
|---|---|---|
| (EG) | -OCH₂CH₂O- | oxyethyleneoxy (ethylene glycol) |
| and | | |
| (A_{n′}) | | optional nonionic hydrophile, typically similar to, or identical with (Eₙ); |

wherein (EG) exemplifies a repeat unit derived from a diol which is less preferred than 1,2-propylene glycol. Thus, (EG) can partially replace (PG) backbone repeat units. (Aₙ′) is used herein to represent nonionic hydrophile units, of a kind which can optionally interrupt the ester backbone at random, leading to structures such as:
(CAPₐ)-(Eₙ)-{B}-(Aₙ′)-{B}-(Eₙ)-(CAPₐ)
(CAP_{b})-(Eₙ)-{B}-(Aₙ′)-{B}-(Eₙ)-(CAP_{b})
As noted supra, such backbone interruption is preferably minimal.

The sulfonated ester oligomers are typically water-soluble or water-dispersible. Whatever their precise solubility in pure water, they are found to formulate well into laundry detergent compositions, with particularly good formulability being associated with the (CAPₐ) and (CAP_{b}) substituted esters. Furthermore, the improved formulability does not apparently detrimentally influence the action of the sulfonated ester oligomers as soil-release agents.

Methods of making the novel ester compositions are also provided, particularly effective being a radical-initiated sulfonation of a preformed, allyl-group end-capped, terephthalate ester oligomer precursor (hereinafter "A.T.E"). Using the above-introduced abbreviations, this useful precursor is illustrated at the molecular level by structures such as:
(ALLYL)-(Eₙ)-{B}-(Eₙ)-(ALLYL) (highly preferred) or, less desirably, (ALLYL)-(Eₙ)-{B}-(Aₙ)-(B)-(Eₙ)-(ALLYL). The conditions used for preparing the A.T.E, as further illustrated in the preferred embodiments hereinafter, are consistent with minimizing the relative proportion of the (Aₙ)-containing material.

### DETAILED DESCRIPTION OF THE INVENTION

The present invention encompasses sulfonated oligomeric ester compositions adapted for use as soil release agents in laundry products such as detergents or fabric conditioners.

The compositions of the invention can be described in terms of the particularly sulfonated product of a specific, preformed, substantially linear ester oligomer, identified simply as "A.T.E.". The terminal units of the A.T.E. comprise a high proportion of allyl or methallyl end-caps and the repeat units in the backbone comprise terephthaloyl and low molecular weight diol-derived units.

Surprisingly, there does not appear to be any specific disclosure in the literature of this type of material, the composition of which, per mole, is more specifically described as follows.

The A.T.E. composition comprises (a), terminal units; (b), nonionic hydrophile units; (c), repeat units of the aryldicarbonyl type; and (d), repeat units of the low molecular weight diol type.

More specifically, the A.T.E. composition comprises from 1 mole to 2 moles, per mole of the composition, of terminal units derived from a low molecular weight olefinically unsaturated component. Preferably, this component is selected from the group consisting of allyl alcohol and methallyl alcohol. Most preferably, substantially all (i.e., 2 moles) of the terminal units are allyl end-caps.

The A.T.E. composition comprises from 1 mole to 4 moles, more preferably from 1.5 moles to 3 moles, most preferably 2 moles per mole of the composition, of nonionic hydrophile units. These units are derived from 100% ethylene oxide. The nonionic hydrophile units have a degree of polymerization in the range from 4 to 30, more preferably from 8 to 20. As noted supra, the nonionic hydrophilic units can in general terms either interrupt the backbone structure or be situated between the backbone and the allyl terminal units; it is highly preferred that the latter be the case.

The A.T.E. composition comprises from 1.1 moles to 20 moles, more preferably from 1.5 to 10 moles, most preferably from 2 moles to 7 moles, per mole of the composition, of repeat units derived from an aryldicarbonyl component. The aryldicarbonyl component is comprised of from 50% to 100%, more preferably from 80% to 100% dimethylterephthalate. Most preferably, this component consists essentially of dimethyl terephthalate and the resulting aryldicarbonyl repeat units are substantially terephthaloyl. The essential terephthaloyl units can alternatively be made from any of terephthalic acid, bis-(2-hydroxy-ethyl)terephthalate and bis-(2-hydroxypropyl)terephthalate. The latter two sources of terephthaloyl units, of course, provide at the same time repeat units of type (d), which are separately accounted for below. If present, repeat units of the aryldicarbonyl type which are not terephthaloyl repeat units, are based on known aryldicarbonyl materials and consist essentially of C, H and O; such aryldicarbonyl repeat units are illustrated by isophthaloyl and phthaloyl.

Finally in accounting for the composition, the A.T.E. comprises from 0.1 moles to 19 moles, more preferably from 0.5 moles to 9 moles, most preferably from 1 mole to 6 moles, of repeat units derived from a diol component selected from the group consisting of C₂-, C₃- and C₄ diols (i.e., C₂-, C₃- and C₄ glycols). This component is preferably selected from 1,2-propylene glycol, and mixtures with ethylene glycol. Most preferably, this component consists essentially of 1,2-propylene glycol; the corresponding repeat units are oxypropyleneoxy repeat units.

The sulfonated terephthalate ester oligomer compositions of the invention, hereinafter "S.T.E.", comprise (a), terminal units; (b), nonionic hydrophile units; (c), repeat units of the aryldicarbonyl type; (d), repeat units of the low molecular weight diol type; and (e), sulfinate groups, sulfonate groups or mixtures thereof.

As compared with the terminal units of the A.T.E., which are olefinically unsaturated, preferably allyl terminal units, the terminal units (a) of the S.T.E. are substantially saturated. The sulfinate or sulfonate groups (e) are covalently attached to the terminal units, forming the structures identified hereinabove in summary as (CAPₐ), (CAP_{b}) or (CAP_{c}).

The extent of sulfonation is typically from 2 mole to 4 moles, and the S.T.E. includes compounds containing from 3 moles to 4 moles of -SOₓM groups, wherein x is 2 (sulfinate) or 3 (sulfonate). The sulfinate or sulfonate groups are derived from a bisulfite component. The latter is preferably selected from the group consisting of HSO₃M wherein M is a conventional water-soluble cation such as sodium, potassium or a stable, water-dissociable organic cation. The composition of the S.T.E., in terms of the other units present (namely (b), nonionic hydrophile units; (c), repeat units of the aryldicarbonyl type; and (d), repeat units of the low molecular weight diol type) is in accordance with their being derived from the A.T.E.

In a preferred embodiment of the invention, the backbone of the S.T.E. consists essentially of terephthaloyl repeat units which alternate with oxyalkyleneoxy repeat units selected from oxyethyleneoxy repeat units and oxy-1,2-propyleneoxy repeat units wherein the oxyethyleneoxy : oxy-1,2-propyleneoxy mole ratio is in the range from 0:1 to 0.9:0.1, more preferably from 0:1 to 0.4:0.6; most preferably 0:1 (i.e., substantially oxy-1,2-propyleneoxy). To this backbone are attached, at each end, hydrophilic repeat units consisting of poly(oxyethylene)oxy units (polymerized ethylene oxide) which have an average degree of polymerization of from 4 to 30, more preferably from 8 to 20. The poly(oxyethylene)oxy units are capped with the above-identified sulfonated allyl terminal units; these can have any of the formulae (CAPₐ), (CAP_{b}) and (CAP_{c}) summarized above; most preferably, the relative proportion of (CAPₐ) and/or (CAP_{b}) is high in comparison with that of (CAP_{c}).

Another preferred embodiment of the invention illustrates the high relative proportion of the sulfonated end-caps of the S.T.E. in relation to the total of other units present. In this embodiment, the invention encompasses the sodium salt form of a sulfonated oligomeric ester (S.T.E.) composition consisting essentially of:
(i) a substantially linear oligomeric ester backbone, which is comprised of from 85% to 100% by weight of terephthaloyl and oxy-1,2-propylenoxy repeat units; and
(ii) terminal moieties covalently attached to said backbone; wherein said terminal moieties are comprised of from about 70% to 100% by weight of moieties selected from the group consisting of -(Eₙ)(CAPₐ), -(Eₙ)(CAP_{b}) and -(Eₙ)(CAP_{c}) (wherein the abbreviations are as identified in summary above); wherein n represents an average degree of polymerization, in the range from 8 to 20; and wherein said composition, the percentage of weight of the end-cap moieties (CAPₐ), (CAP_{b}) and (CAP_{c}) is in the range from 5% to 40%, more preferably from 10% to 30%.

In the above-illustrated embodiment, the mole ratio of all the doubly sulfonated end-cap moieties, i.e., (CAPₐ), (CAP_{b}) or mixtures thereof, in relation to the singly sulfonated end-cap moieties (CAP_{c}), ranges from 1:5 to 1:0, more preferably from 2:1 to 1:0, and includes materials at ratios of from 5:1 to 1:0.

The above-identified features of the S.T.E. are in accordance with the synthesis thereof, which in the preferred embodiment involves a particular ordered series of steps.

First, allyl alcohol ethoxylate or methallyl alcohol ethoxylate is made or obtained from commerical sources. The synthesis is well-known; note however that the allyl or methallyl alcohol ethoxylate should not be made without due care, and that if the samples are commercially obtained, they should be of good purity. Unacceptable levels of impurities such as vinyl derivatives and/or polyethylene glycol can easily result from an improperly controlled synthesis. Polyethylene glycol levels in particular should be controlled, since this dihydric, relatively high molecular weight alcohol can act as a source of units of the type identified as (Aₙ) in the foregoing discussion. For this reason, synthesis of suitable allyl alcohol ethoxylate is further illustrated in detail in the Examples hereinafter.

The allyl alcohol ethoxylate is reacted under ester-making conditions. Typically a two-part procedure is used, involving first, transesterification under an inert atmosphere; and second, oligomerization at reduced pressure, of a mixture comprising the allyl alcohol ethoxylate and suitable chemical sources of the aryldicarbonyl repeat units and the low molecular weight diol repeat which will react to form the ester backbone -{B}- (e.g., dimethyl terephthalate and 1,2-propylene glycol). The procedure forms the above-identified allyl end-capped oligomeric ester (A.T.E.).

In more detail, the transesterification stage typically involves reacting the calculated proportions of allyl alcohol ethoxylate and dimethylterephthalate, together with an excess (e.g., 50-100% molar excess beyond theoretical incorporated diol) of diol (e.g., 1,2-propylene glycol), in the presence of a conventional transesterification catalyst; methanol is removed by evaporation or distillation. Suitable transesterification catalysts include metal derivatives such those of zinc, titanium, anitmony and tin; the oxides, alkoxides, carbonates, acetates, alkyl esters or alkyls can be used. Such catalysts are further illustrated by tetraisopropoxytitanium-(IV), n-butyl(trihydroxy)tin-(IV), and zinc acetate. The practitioner should note that particular care is taken (e.g., excluding air, mixing well to avoid hot-spots, and avoiding over-heating) to avoid undesired side-reactions of the rather reactive allyl groups.

The oligomerization stage involves further reacting the product of the transesterification stage, at an oligomerization temperature which is higher, and at an oligomerization pressure which is lower, than the temperature and pressure used in the transesterification stage. Typically, a small amount of methanol, and the excess diol, are removed under the reduced pressures. Typically, no separate oligomerization catalyst is needed.

A radical-initiated olefin sulfonation procedure is now carried out. This typically involves reaction of the A.T.E. with a source of bisulfate in the presence of water. The bisulfite can be derived from many alternative sources, such as SO₂ and base, metabisulfite salts, etc., and the cation is commonly sodium or potassium. The radical-initiated olefin sulfonation used herein is desirably a low-temperature procedure; aggressive conditions, especially heating under potentially hydrolyzing conditions, could otherwise tend to decompose the A.T.E. or the product S.T.E. Thus, it is highly preferred to use a low-temperature ( 0°C - 100°C) free radical initiator).

In general, the radical initiator used herein is water soluble or alcohol-water soluble. The preferred initiator are azo initiators or redox initiators. Such initiators are well known in the art. For the purposes of the instant invention, redox initiators are especially preferred since their use is associated with much shorter reaction times and much lower reaction temperatures relative to any other known initiators.

Suitable azo initiators are available in commerce under the trademarks of various manufacturers ( WAKO, DuPONT, ALDRICH) and include materials chemically identified as 2,2′-azobis(N,N′-dimethyleneisobutyramidine)dihydrochloride, 2,2′-azobis(2-amidinopropane)dihydrochloride, 4,4′-azobis(4-cyanopentanoic acid), and 2,2′-azobis{2-methyl-N-(1,1-bis{hydroxymethyl}ethyl)propionamide}.

When using an azo initiator, the free-radical initiated olefin sulfonation procedure is preferably carried out at temperatures in the range from 20°C to 100°C, more preferably from 40°C to 65°C; pressure is in the range from 0.5 atm. to 3.0 atm., more preferably from 1 atm. to 1.5 atm., and a reaction time in the range from 5 hrs. to 90 hrs., more preferably from 10 hrs. to 30 hrs., is used.

Redox initiator systems are illustrated by persulfate / Cu⁺ and persulfate in combination with a water-soluble metal salt of Fe⁺, Mn⁺ or Co⁺.

When using a redox initiator, the radical initiated olefin sulfonation procedure is preferably carried out at temperatures in the range from 0°C to 40°C, and a reaction time of as little as from 0.1 hrs. to 24 hrs. can be used. More preferably, the sulfonation temperature is in the range from 10°C to 30°C, and the sulfonation time is from 0.5 hrs. to 10 hrs. Pressure is in the range from 0.5 atm. to 3 atm., more preferably from 1 atm. to 1.5 atm.

An important particularity of the sulfonation stage is the need to keep the reactants in good contact. It should be appreciated that unless care is taken (temperature control, mixing, use of alcohol-water solvents) there will be a tendency for the allyl end-capped A.T.E. ester to separate from the aqueous sulfonation reagent, resulting in poorer sulfonation yields.

As noted in the summary, it is possible to vary the proportions of (CAPₐ), (CAP_{b}) and (CAP_{c}) end-caps in the sulfonated esters of the invention. Adjustment of the pH used in the above-outlined sulfonation stage to lower pH values, and/or use of excess bisulfite, tends to favor higher levels of (CAPₐ) (sulfinate-sulfonate); in contrast at higher pH values, especially when little or no bisulfite excess is present, (CAP_{c}) monosulfonate) predominates. In connection with olefin sulfonation pH effects, see the disclosures of Bright, Stubbs et al and Shepherd, referred to supra and incorporated herein by reference. When it is desired to maximize the proportion of the preferred (CAP_{b})-containing esters, an optional hydrogen peroxide oxidation step, carried out after the sulfonation reaction, will indeed successfully convert (CAPₐ) to (CAP_{b}). If such an oxidation step is carried out, the peroxide is in dilute aqueous form, and is typically added at ambient temperature with stirring.

In light of the above, the S.T.E., in another preferred embodiment of the invention is the product of a process comprising, in sequence, the following ester-bond forming procedure and radical-initiated sulfonation procedure:
Ester-bond-forming procedure: a transesterification step, comprising reacting a mixture of I) 2 moles of allyl alcohol ethoxylated to an average degree of polymerization of from 4 to 30 (more preferably, 8 to 20); and II) from 2 to 7 moles of dimethyl terephthalate; and III) from 2 moles to 14 moles of diol ( e.g., 1,2-propylene glycol or mixture thereof with ethylene glycol provided that the mole fraction of ethylene glycol does not exceed 0.4);(note that this represents an excess over what will ultimately be incorporated into the composition).

The transesterification step is carried out in the presence of a conventional transesterification catalyst. The transesterification temperature is in the range from 120°C to 250°C (more preferably, 160°C to 230°C).

The transesterification pressure is in the range from 0.75 atm. to 3 atm., where 1 atm. = 760 mmHg. More preferably, the transesterification pressure is in the range from 1 atm. to 2 atm. The transesterification time is from 2 hrs. to 60 hrs., more preferably from 5 to 25 hrs.

To complete the ester-bond forming procedure, the transesterification step is followed by an oligomerization step. The latter involves continuing to react the above-formed mixture under the following conditions: oligomerization temperature: in the range from 170°C to 250°C, more preferably from 180°C to 220°C; oligomerization pressure: in the range from 1 x 10 ⁻⁶ atm. to 0.5 atm., more preferably 1 x 10 ⁻⁴ atm. to 0.05 atm.; and oligomerization time: from 2 hrs. to 60 hrs., more preferably from 5 hrs. to 25 hrs.; whereby precursor allyl end-capped co-oligomeric ester (A.T.E.) is produced.

In a radical-initiated olefin sulfonation procedure, the A.T.E. material is now treated by at least one step of sulfonating the same in the presence of water, with a conventional bisulfite sulfonating reagent, in the presence of a low-temperature free -radical sulfonation initiator selected from azo initiators and redox (e.g., persulfate / metal cation) initiators; in this step, the reactants are effectively cocontacted (e.g., good mixing to make a homogeneous appearing aqueous reaction mixture) and the level of the conventional bisulfite sulfonating agent is from 1 mole to 4 moles , more preferably from 3 moles to 4 moles, per mole of said allyl end-capped co-oligomeric ester (A.T.E.); also, the following sulfonation conditions are respected:
sulfonation temperature: in the range from 0°C to 100°C; sulfonation pressure: in the range from 0.5 atm. to 3 atm.; and sulfonation time: from 0.1 hrs. to 90 hrs.

After sulfonation, the sulfonated oligomeric ester composition (S.T.E.) of the invention, directly obtained in aqueous form (the water content is typically 80% or less), can be used without further purification as a soil release agent, e.g., by mixing into a liquid detergent composition. In the alternative, the very simple peroxide oxidation briefly referred to supra can first be carried out. If desired, the S.T.E. can be conventionally dried, or can be admixed with oligomeric ester soil release agents of types previously described in the art. The more conveniently handled aqueous form of the S.T.E. is a very well divided suspension, or, more typically, a clear solution. The associated advantage of not having to disperse the sulfonated esters prior to laundry product formulation is of considerable benefit to the formulator.

Despite the rather high solubility of the sulfonated oligomeric ester of the invention, it functions effectively as a soil release agent and thus meets the needs of the consumer as well as being convenient to the formulator.

In summary, the preferred S.T.E. has the particularity of being produced by an ester-bond forming procedure and a radical-initiated low temperature olefin sulfonation procedure, in that specific order. Quite differently from the process of Gosselink ′580, the process arrives at a particular, terminally sulfonated, substantially linear co-oligomeric ester composition without reliance upon a chlorinated compound and without reliance upon a procedure comprising the order of steps: sulfonation step, ethoxylation step. A finding of particular interest in terms of the synthesis of the ester compositions is that the preferred sulfonated oligomeric ester compositions can be made by aqueous radical-initiated sulfonation of the preformed allyl ester oligomer (A.T.E.), which has a backbone composition similar to, or identical with, that of the final sulfonated material, and which also includes the above-identified nonionic hydrophile units.

For additional detail concerning various low-level optional units which the esters of the invention can contain, as well as in terms of general synthetic methods, suitable starting-materials, and disclosure in connection with the preparation of laundry compositions, the practitioner is directed to the following Gosselink patents, U.S. Patent 4,721,580, issued January 26; U.S. Patent 4,702,857, issued October 27, 1987; U.S. Patent 4,711,730, issued December 8, 1987; and U.S. Patent 4,713,194, issued February 15, 1987.

In its detergent embodiments, the invention encompasses a laundry detergent or fabric conditioner composition comprising one or more conventional surface-active agents selected from conventional anionic, cationic or nonionic detersive surfactants, and conventional cationic fabric softeners; wherein the composition additionally comprises at least 0.05% by weight of the ester composition of the invention.

Liquid laundry detergent compositions, whether concentrated or dilute, are especially preferred. Such liquid detergent compositions can comprise from about 5% to about 40% of a conventional anionic surfactant and from about 0.05% to about 15% (dry basis, sodium salt form) of the sulfonated oligomeric ester composition (S.T.E.). In another embodiment, the liquid detergent compositions comprise from about 5% to about 40% of a conventional nonionic surfactant and from about 0.05% to about 15% (dry basis, sodium salt form) of the sulfonated oligomeric ester composition (S.T.E.).

Assisted by the desirable formulability characteristics of the S.T.E., substantially isotropic, heavy-duty built liquid laundry detergent compositions can readily be formulated comprising:
from 10% to 30% of a conventional alkylbenzene sulfonate anionic surfactant, on an acid basis;
from 0% to 30% of one or more conventional cosurfactants selected from nonionic surfactants, cationic surfactants, zwitterionic surfactants and mixtures thereof;
from 5% to 30% of a conventional liquid detergent builder;
from 0.01% to 10% of the sulfonated oligomeric ester composition;
and from 0% to 1% of a conventional proteolytic enzyme. In the above, proteolytic enzyme-containing built liquid laundry detergent compositions are especially superior. More recently developed enzymes, such as cellulase enzymes, are also compatible and can be formulated together with the S.T.E.

The invention is further illustrated by the following examples; percentages are by weight unless otherwise noted.

### EXAMPLE 1

### Step 1:

### Preparation of allyl alcohol ethoxylate, having average degree of polymerization of about 15:

The following procedure is carried out in a fume hood; a trapping system is optionally used for additional reassurance in preventing escape of ethylene oxide vapors.

Allyl alcohol (8.72 g, 0.15 moles, 99+%, Aldrich) is placed in a suitably sized dry, three-necked round bottom flask fitted with magnetic stirrer, condenser and gas inlet and outlet. The flask and contents are cooled under a nitrogen atmosphere to about 0°C. Sodium metal shot (0.17 g, 0.0074 moles, Aldrich) is added slowly under a countercurrent of nitrogen. The mixture is stirred for 1.5 hrs at about 0°C. Other strong bases can equally be used in substitution for the sodium. The temperature is allowed to rise to room temperature, at which stage essentially no sodium metal remains visible. The stirred mixture is heated to reflux, at which stage ethylene oxide gas is introduced into the solution through a glass tube at a rate at which it is mostly absorbed by the mixture rather than being wastefully expelled. Over a 2-hour period during which ethylene oxide addition is continued, the reflux temperature increases from about 110°C to about 140°C. To avoid forming vinyl ether by-products, the temperature during this procedure is in any event never permitted to exceed about 150°C. Completion of the reaction to an average degree of polymerization of about 15 is confirmed by measuring volume uptake of ethylene oxide, measuring weight gain of the reaction mixture, or measuring both these quantities. The mixture is cooled to room temperature, and is treated with aqueous HCl (7.4 cm³, 1M, Fisher). The product at this stage is neutral. Substantially all water present is removed under aspirator vacuum. The product is filtered to remove sodium chloride. Yield is 77.8g (0.106 moles). The ¹H n.m.r analysis is consistent with the above-identified degree of polymerization. Thus, integrals of the resonances in the following regions of the spectrum are obtained:
integral of resonances at delta = 5.18 ppm, CH₂=CHCH₂O(CH₂CH₂O)ₙH;
integral A; and integral of resonances at delta = 3.1 to 3.8 ppm, CH₂=CHCH₂O(CH₂CH₂O)ₙH and CH₂=CHCH₂O(CH₂CH₂O)ₙH; integral B.
It is found that (1/2 integral B)/(integral A) = n = 15.3.

In the ¹H n.m.r data above and throughout the specification, chemical shifts, delta, are expressed in parts per million (ppm) referred to tetramethylsilane (TMS) (delta = 0 ppm). In practice, a secondary reference of known chemical shift, such as hexadeuterodimethylsulfoxide (DMSO-d₆), can equally be used in the n.m.r experiments for convenience, and the TMS shifts are then obtained by difference.

### Step 2:

### Reaction of the product of step 1 with dimethyl terephthalate and 1,2-propylene glycol (two-stage procedure involving transesterification and oligomerization stages):

The product of step 1 (19.1 g, 0.026 moles) is placed in a dry suitably sized round bottom flask equipped with magnetic stirrer, fitted with gas inlet, nitrogen bubbler and a modified Claisen head which supports a condenser and receiving flask. Dimethyl terephthalate (7.00 g, 0.0360 moles, Aldrich), 1,2-propylene glycol (3.40 g, 0.045 moles, Mallinckrodt, 98%) and a conventional transesterification catalyst such as FASCAT 4100 (TM) M&T Chemicals Inc., 0.03 g; 0.1% w/w, are added under a nitrogen blanket. The mixture is stirred and heated to about 140°C, taking about 15-30 minutes. This temperature is maintained for about 1 hour. The temperature is now raised to about 170°C taking about 15-30 minutes. During the following 41 hours, the transesterification is continued and methanol together with some propylene glycol (total 2.8 ml., theory 2.9 ml) distil from the reaction mixture.

The apparatus is then cooled to room temperature and the reaction mixture is transferred to a Kugelrohr apparatus. The Kugelrohr is maintained under vacuum (ca. 1mmHg) and the temperature is raised to about 180-190°C over a 1 hr period. the reaction mixture is held at this temperature for a total oligomerization time of about 17 hrs. The product of the transesterification and oligomerization procedure is cooled to room temperature.

The reaction is demonstrated to be substantially complete by 270 MHz ¹³C n.m.r spectroscopy. Thus, the terminal alcohol-bearing carbon atom resonance (delta = 60.7 ppm, CH₂=CHCH₂O(CH₂CH₂O)ₓ₋₁CH₂CH₂OH, reference = DMSO-d₆, 39.5 ppm) due to unreacted allyl alcohol ethoxylate is at a very low level (integral = 0.04) as is the 1,2-propylene glycol methyl carbon resonance of incompletely allyl-end capped oligomers (delta = 19.99 ppm, -OCH₂CH(OH)CH₃, integral = 0.05; reference as above). The formation of an A.T.E. ester composition is shown by ¹³C resonances at delta - 135.5 ppm, integral = 0.91, (-CH₂-CH=CH₂); and delta = 116.0 ppm, integral = 0.91, (-CH₂-CH=CH₂).

As noted here and throughout the specification, ¹³C n.m.r shifts in parts per million (p.p.m) are referred to tetramethylsilane (0 p.p.m) using hexadeuterated dimethylsulfoxide (DMSO-d₆) as secondary reference for convenience. The crude product thus obtained is cooled to room temperature.

### Step 3.

### Reaction of the product of step 2 with sodium metabisulfite in water (radical-initiated sulfonation, azo initiator):

The A.T.E. product of step 2 (5.00 g, 0.00265 moles) is placed in a dry, suitably sized round bottom flask equipped with magnetic stirrer, fitted with a condenser and gas inlet and outlet. Distilled water (20 g, 1.11 moles) is added under an argon blanket. Sodium metabisulfite (0.554 g, 0.00291 moles, about 10% excess, Fisher) is added in water (5.0 g) and stirred to dissolution. A free radical initiator (2,2′-azobis(N,N′-dimethyleneisobutyramidine) dihydrochloride, VA-044 (TM) Waco Chemicals, 0.03 g, 0.0929 millimoles) is added. The mixture is heated with stirring to about 45°C over about 30 minutes, the temperature being specifically selected to maintain solubility of the oligomer in the aqueous medium and to prevent visible phase separation. After a sulfonation reaction time of about 2.75 hrs, the temperature is increased to about 50°C. (The practitioner is careful with temperature control, using it to avoid undesirable solubility problems or visible phase separation from developing). Additional VA-044 (0.05 g, 0.155 millimoles) is added to the reaction mixture. Heating is continued for an additional sulfonation reaction time of about 19 hrs. Analysis at this stage shows the reaction time to be about complete. The reaction mixture is filtered to remove traces of precipitate, and is transferred to a Kugelrohr apparatus, where it is heated under aspirator vacuum to a temperature of about 100°C to remove water. The apparatus is then cooled and the tacky product is scraped out. The weighed yield is 3.84 g; note that a substantial amount of material remains in the flask of the Kugelrohr and that, on reproducing the synthesis, yields are more typically near theory.

Analysis by ¹H n.m.r and ¹³C n.m.r spectroscopy is indicative of a high ( 85% - 95% ) degree of sulfonation of the oligomer allyl moieties as inferred by disappearance of the ¹H resonances at delta = 5.85 ppm (-CH₂-CH=CH₂) and delta = 5.18 ppm (-CH₂CH=CH₂) and the ¹³C resonances at delta = 135.5 ppm (-CH₂-CH=CH₂) and delta = 116.0 ppm (-CH₂-CH=CH₂) and further confirmed by the appearance of new resonances, particularly those in the ¹³C n.m.r spectrum at delta = 25.0 ppm (-CH₂-CH₂-CH₂{SO₃ ⁻}), integral = 0.75; delta = 48.3 ppm (-CH₂-CH₂-CH₂{SO₃ ⁻}), integral = 0.75; delta = 64.2 ppm (-CH₂-CH{SO₂ ⁻}-CH₂{SO₃ ⁻}), integral = 0.02; delta = 44.6 ppm (-CH₂-CH{SO₂ ⁻}-CH₂{SO₃ ⁻}), integral = 0.02; delta = 57.7 ppm (-CH₂-CH{SO₃ ⁻}-CH₂{SO₃ ⁻}), integral = 0.23; and delta = 49.2 ppm (-CH₂-CH{SO₃ ⁻}-CH₂{SO₃ ⁻}), integral = 0.23. In the foregoing, the integrals are normalized based upon the sum of the terminal carbon atom resonances and as noted supra, ¹H n.m.r data are referred to tetramethylsilane, delta = 0 ppm.

### EXAMPLE 2

### Step 1:

### Preparation of allyl alcohol ethoxylate having average degree of polymerization of about 11:

The following procedure is carried out in a fume hood; a trapping system is optionally used for additional reassurance in preventing escape of ethylene oxide vapors.

Allyl alcohol (100 g, 1.72 moles, 99+%, Aldrich) is placed in a suitably sized dry, three-necked round bottom flask fitted with magnetic stirrer, condenser and gas inlet and outlet. The flask and contents are cooled under a nitrogen atmosphere to about 0°C. Sodium metal shot (1.98 g, 0.086 moles, Aldrich) is added slowly under a countercurrent of nitrogen. The mixture is stirred for 1.5 hrs at about 0°C. (Other strong bases can equally be used in substitution for the sodium). The temperature is allowed to rise to room temperature, at which stage essentially no sodium metal remains visible. The stirred mixture is heated to reflux, at which stage ethylene oxide gas is introduced into the solution through a glass tube at a rate at which it is mostly absorbed by the mixture rather than being wastefully expelled. Over a 6-hour period during which ethylene oxide addition is continued, the reflux temperature increases from about 100°C to about 140°C. To avoid forming vinyl ether byproducts, the temperature during this procedure is in any event never permitted to exceed about 150°C. Completion of the reaction to an average degree of polymerization of about 11 is confirmed by measuring volume uptake of ethylene oxide, measuring weight gain of the reaction mixture, or measuring both these quantities. The mixture is cooled to room temperature, and is treated with aqueous HCl (15 cm³, 1M, Fisher). The product at this stage is neutral. Substantially all water present is removed under aspirator vacuum. The product is filtered to remove sodium chloride. Yield is 886 g, 1.63 moles. ¹H n.m.r analysis using the method of Example 1 is consistent with the average degree of polymerization of about 11.

### Step 2:

### Reaction of the product of step 1 with dimethyl terephthalate and propylene glycol (two-stage procedure involving transesterification and oligomerization stages):

The product of step 1 (88.6 g, 0.163 moles) is placed in a dry, suitably sized round bottom flask equipped with magnetic stirrer, fitted with gas inlet, nitrogen bubbler and a modified Claisen head which supports a condenser and receiving flask. Dimethyl terephthalate (43.6 g, 0.225 moles, Aldrich), 1,2-propylene glycol (21.8 g, 0.286 moles, Mallinckrodt, 98%) and a conventional transesterification catalyst such as FASCAT 4100 (TM) M&T Chemicals Inc., 0.154 g; 0.1% w/w, are added under a nitrogen blanket. The mixture is stirred and heated to about 140°C over a period of about 15-30 minutes. This temperature is maintained for about 1 hour. The temperature is now raised to about 170°C, taking about 15 minutes. During the following 18 hours, the transesterification is continued and methanol together with some propylene glycol (total 15.1g, theory 14.4g) distil from the reaction mixture.

The apparatus is then cooled to room temperature and the reaction mixture is transferred to a Kugelrohr apparatus. The Kugelrohr is maintained under vacuum (ca. 1mmHg) and the temperature is raised to about 200°C over a 1 hr. period. The reaction mixture is held at this temperature for a total oligomerization time of about 5 hrs. The product of the transesterification and oligomerization procedure is cooled to room temperature.

The reaction is demonstrated to be substantially complete by 270 MHz ¹³C n.m.r spectroscopy, giving results similar to those of Example 1, step 2 with the exception of the degree of polymerization which, as noted, is about 11.

The A.T.E. product thus obtained is cooled to room temperature.

### Step 3.

### Reaction of the A.T.E product of step 2 with sodium metabisulfite in water (radical-initiated sulfonation, azo initiator):

The product of step 2 (100 g, 0.0635 moles) is placed in a dry, suitably sized round bottom flask equipped with magnetic stirrer, fitted with a condenser and gas inlet and outlet. Distilled water (200 g, 11.1 moles) is added under an argon blanket. Sodium metabisulfite (10.58 g, 0.0557 moles, Fisher) is added in water (150 g) and stirred to dissolution. Nitrogen gas is bubbled through the solution for about 20 min. A free radical initiator ( 2,2′-azobis(N,N′-dimethyleneisobutyramidine) dihydrochloride, VA-044 (TM) Waco Chemicals, 0.216 g, 0.668 millimoles, dissolved in about 60 g of water) is added. The mixture is heated with stirring to about 35°C, taking about 30 minutes; the temperature being specifically selected to maintain solubility of the oligomer in the aqueous medium and to prevent visible phase separation. After a sulfonation reaction time at 35°C of about 8 hrs, it is acceptable to increase the temperature. Thus, over about 30 minutes, the temperature is increased to about 45°C. (The practitioner remains careful with temperature control, using it to avoid undesirable solubility problems or visible phase separation from developing.) The sulfonation reaction is allowed to continue for an additional 8.9 hr period. The temperature is then increased yet again over about 30 minutes, to about 55°C, and the sulfonation reaction is allowed to continue for a further 30 hrs. Additional sodium metabisulfite (2.23 g, 0.0117 moles) and VA-044 (0.108 g, 0.334 millimoles) is added to the reaction mixture. Reaction at 55-60°C is continued for an additional sulfonation reaction time of about 26 hrs. Analysis at this stage shows the reaction to be about complete. The aqueous product solution (79% water) is filtered to remove traces of precipitate. Analysis by ¹H n.m.r. and ¹³C n.m.r. spectroscopy is indicative of a high (85% - 95%) degree of sulfonation of the oligomer allyl moieties as inferred by disappearance of the ¹H resonances at delta = 5.85 ppm (-CH₂-CH=CH₂) and delta = 5.18 ppm (-CH₂CH=CH₂) and the ¹³C resonances at delta = 135.5 ppm (-CH₂-CH=CH₂) and delta = 116.0 ppm (-CH₂-CH=CH₂) and further confirmed by the appearance of new resonances, particularly those in the ¹³C n.m.r spectrum at delta = 25.0 ppm (-CH₂-CH₂-CH₂{SO₃-}), integral = 0.75; delta 48.3 ppm (-CH₂-CH₂-CH₂{SO₃-}), integral = 0.75; delta = 64.2 ppm (-CH₂-CH{SO₂-}-CH₂{SO₃-}), integral = 0.15; delta = 44.6 ppm (-CH₂-CH{SO₂-}-CH₂{SO₃-}), integral = 0.15; delta = 56.7 ppm (-CH₂-CH{SO₃-}-CH₂{SO₃-}), integral = 0.10; and delta = 49.2 ppm (-CH₂-CH{SO₃-}-CH₂{SO₃.}), integral = 0.10. In the foregoing, the integrals are normalized based upon the sum of the terminal carbon atom resonances and as noted supra, ¹H n.m.r. data are referred to tetramethysilane, delta = 0 ppm.

A sample of the aqueous A.T.E. product is titrated using standard iodometric methods; see "Basic Theory and Practice of Quantitative Chemical Analysis", R. B. Fischer and 0. G. Peters, W. B. Saunders Co., West Washington Square, Philadelphia, PA, 3rd Edition, 1968, pages 571, 572, 584-590; incorporated herein by reference. The molarity of oxidizable sulfur-containing groups is 0.024 M.

### EXAMPLE 3

### Peroxide oxidation of the product of Example 2:

To a sample of the aqueous A.T.E. product of Example 2 (350 cm³) is added dropwise, at ambient temperature, aqueous hydrogen peroxide (5.7g, 5%, 8.4 millimoles). The solution is reacted at about 45°C for about 30 min., and is then cooled to ambient temperature. A test using peroxide test paper (E.M. QUANT, 0-100 ppm range) is negative for peroxide.

The relevant ¹³C n.m.r data now obtained are as follows: delta = 25.0 ppm (-CH₂-CH₂-CH₂{SO₃-}), integral = 0.75; delta = 48.3 ppm (-CH₂-CH₂-CH₂{SO₃-}), integral = 0.75; delta - 64.2 ppm (-CH₂-CH{SO₂-}-CH₂{SO₃-}), integral = 0.05; delta - 44.6 ppm (-CH₂-CH{SO₂-}-CH₂{SO₃-}), integral 0.05; delta = 56.7 ppm (-CH₂-CH{SO₃-}-CH₂{SO₃-}), integral 0.2; and delta = 49.2 ppm (-CH₂-CH{SO₃-}-CH₂{SO₃-}), integral = 0.2; the integrals are normalized as noted in the Examples supra.

### EXAMPLE 4

Radical-initiated sulfonation of A.T.E using a redox initiator and sodium metabisulfite at low pH:

Allyl end-capped oligomeric ester, specifically that of Example 2, step 2 hereinabove (100g, 0.0635 moles) is placed in a dry, suitably sized round bottom flask equipped with a magnetic stirrer, condenser and gas inlet and outlet. Distilled water (150g) is added under a nitrogen blanket. Sodium metabisulfite (24.15g, 0.127 moles, Aldrich) is added in water (310g) and stirred to dissolution. Nitrogen gas is bubbled through the solution for about 30 minutes. The pH, as measured using a sensitive conventional pH paper, is about 4.5. The mixture is cooled in an ice bath to a temperature of about 5°C, at which time the pH is adjusted to about 2.0 using about 15 ml of 15% sulfuric acid. The mixture is removed from the ice bath, and is warmed to ambient temperature over about 1 hour. Sodium persulfate (0.605g, 2.54 millimoles) is then added. Upon dissolution of the sodium persulfate, FeSO₄ in aqueous solution (2.0 ml, 0.013 M) is added. After stirring for about 1.5 hrs at ambient temperature, residual bisulfite is determined by titration (see Example 2 for reference to the procedure) as being about 17% by weight of the amount originally added. Analysis at 2.0 hrs. indicates 13% residual bisulfite. At 2.5 hrs., additional FeSO₄ (2.0 ml, 0.013 M) is added, and the reaction is allowed to continue for an additional 16 hrs. The residual bisulfite now measures about 8%. At this stage, the pH is about 2.1. The pH is raised to about 6.0 using about 10.0 ml of 5% aqueous NaOH. The total volume is about 560 ml (about 21% solids). Analysis by ¹H n.m.r (freeze-dried sample redissolved in DMSO d₆) is indicative of a high degree (85%-95%) of sulfonation of the oligomeric terminal allyl moieties, as inferred by the disappearance of the ¹H resonances at delta = 5.85 ppm (-CH₂-CH=CH₂) and delta = 5.18 ppm (-CH₂-CH=CH₂) and the ¹³C resonances (solvent D₂O: DMSO d₆ 1:1 v/v) at delta = 135.5 ppm (-CH₂-CH=CH₂) and delta = 116.0 ppm (-CH₂-CH=CH₂). Formation of an S.T.E. product wherein about 90% of the allyl end-caps at the ends of the ester oligomer have been converted to sulfinate-sulfonate end-caps (CAPₐ) is confirmed by integrals of the new resonances, particularly those in the ¹³C n.m.r spectrum at delta = 63.9 ppm (-CH₂-CH{SO₂ ⁻}-CH₂{SO₃ ⁻}) and delta = 45.2 ppm (-CH₂-CH{SO₂ ⁻}-CH₂{SO₃ ⁻}).

### EXAMPLE 5

### Peroxide oxidation of the product of Example 4:

To a sample of the substantially clear aqueous S.T.E. product obtained in Example 4 (280 ml, approximately 0.113 M) is added dropwise, at ambient temperature, over 0.5 hrs., an aqueous solution of hydrogen peroxide (25g, 10% v/v). The reaction mixture is stirred at ambient temperature overnight. The reaction mixture is then heated to about 50°C over a period of about 0.5 hrs. and is maintained at 50°C for about 1.0 hr. Analysis by ¹³C n.m.r. (D₂O : DMSO d₆ 1:1 v/v) is indicative of a high (about 90%) degree of conversion of the sulfinate-sulfonate end caps (CAPₐ) to disulfonate end-caps (CAP_{b}). Thus, the resonances at delta = 63.9 ppm (-CH₂-CH{SO₂ ⁻}-CH₂{SO₃ ⁻}) and delta = 45.2 ppm (-CH₂-CH{SO₂ ⁻}-CH₂{SO₃ ⁻}) disappear and are replaced by new resonances at delta = 58.0 ppm (-CH₂-CH{SO₃ ⁻}-CH₂{SO₃ ⁻}) and delta = 49.3 ppm (-CH₂-CH{SO₃ ⁻}-CH₂{SO₃ ⁻}).

### Detergent Compositions

The soil release agents of the type described hereabove can be used to formulate detergent compositions in the form of powders, pastes, liquids, bars, gels, and the like. These compositions are particularly adapted for use in laundering all manner of fabrics, in the conventional manner. Detergent compositions prepared using the soil release agents herein will generally comprise conventional detersive ingredients of the type well-known to those skilled in the art. Following are representative, but nonlimiting, examples of such conventional ingredients.

Surfactants - Detergent compositions typically contain from about 5% to about 50%, more preferably from about 10% to about 25%, by weight of detersive surfactants such as the C₁₁-C₁₃ alkylbenzene sulfonic acids, C₁₂-C₂₀ alpha-sulfonated fatty acids, C₁₂-C₂₀ alkyl polyethoxylated sulfonic acids, tallow alkyl sulfates, olefin sulfonates, and the like. Nonionic surfactants, typically, C₁₂-C₁₈ alkyl polyethoxylates containing from about 5 to about 15 ethylene oxide units, may also be employed. Amine oxides and the common soaps are also conventional. Various cationic surfactants can also be used. Mixtures of anionic and nonionic surfactants are quite commonly used in modern laundry detergent compositions to provide a balanced mix of clay and oily soil removal properties. Standard reference works, such as the McCutcheon's Index, can be referred to for other types of conventional detersive surfactants which are typically employed in laundry compositions, and which can be employed with the soil release materials herein.

Builders - Fully-formulated laundry detergent compositions will also typically contain from 5% to 60%, more typically 10% to 30%, by weight, of various detergency builder materials to sequester water hardness. Again, listings of typical builders can be had from standard texts and reference works. Included among such materials are the alkali metal phosphates, the alkali metal citrates, various polycarboxylate builders including the nitrilotriacetates, the water-soluble oxodisuccinate salts, and the water-soluble salts of tartrate mono- and di- succinate, as described in U.S. Patent 4,663,071; May 5, 1987, the disclosures of which are incorporated herein by reference. These polycarboxylate builders are especially preferred for use in the formulation of low-phosphate detergent compositions. Other types of builder useful herein are the so-called precipitating builders and the zeolites, especially the 1-10 micron particle size Zeolite A detergency builders. The C₁₀-C₁₈ alkylsuccinates are also useful as builder materials, especially in heavy duty liquid compositions. As is extensively described in the patent literature, various mixtures of these builders can also be employed.

Enzymes - Various detersive enzymes can also be employed in detergent compositions in the manner well-known in the art. Included among such materials are the proteases (especially the alkaline proteases), amylases, lipases, and mixtures thereof. Typically, such enzymes will comprise from about 0.05% to about 0.2% by weight of detergent compositions.

Optional Adjuncts - Detergent compositions will also typically contain from 0.1% to 30%, by weight, of various conventional adjunct materials such as bleaches, especially perborate bleaches; bleach activators, such as tetraacetylethylenediamine; suds suppressors, such as various silicones and microcrystalline waxes; perfumes; pH adjusting agents; optical brighteners; and the like. Granular detergent compositions will typically contain solid carrier materials such as sodium sulfate. Liquid detergent compositions will typically comprise an aqueous or aqueous/alcohol carrier.

It is to be understood that the selection of the particular materials used in the preparation of detergent compositions can vary considerably, depending on the desires of the formulator.

The formulator will naturally recognize that the soil release agents of the invention are esters and are thus, by definition, potentially hydrolyzable materials, both during and after formulation into a detergent composition. However, they can simply and conveniently be protected against hydrolysis so that their performance as soil release agents is not substantially impaired by the process of formulation into a detergent composition.

Hydrolysis protection during formulation, as illustrated in a process for making preferred liquid, paste or gel-form detergent composition embodiments of the invention, need involve no more than the following simple expedient; any aggressively acidic or alkaline formula ingredients to be used are selected and blended together in the absence of the soil release agent so as to form an ingredient mixture having pH below about 11, more preferably in the range from about 4 to about 9.5; the soil release agent can now safely be added (see Example 6 hereinafter). In the alternative, preneutralized forms of otherwise hydrolysis-aggressive detergent ingredients can be used. As an additional precaution in making the liquid, gel or paste embodiments, it is preferred to keep formulation temperatures, within practical limits, on the low side (e.g., 20°C-80°C).

Hydrolysis protection after formulation, as illustrated in the preferred liquid, paste and gel-form detergent composition embodiments, is assured by maintaining the composition within the above-specified pH ranges. For processability of liquid compositions, it is convenient to have an alkanolamine, e.g., monoethanolamine (preferred) or diethanolamine, present at low levels, e.g., 0.1% by weight; for bleach compatibility reasons, levels above about 3% are preferably avoided.

When formulating bar, powder or granule forms of detergent compositions incorporating the soil release agents of the invention, the formulator will likewise generally avoid unnecessary prolonged direct exposure of the soil release agent, especially when hot, to hydrolysis-aggressive ingredients such as concentrated aqueous acids or concentrated aqueous bases. When formulating powder or granule, i.e., substantially dry forms of the detergent compositions, advantage can be taken of the fact that the dry forms of the soil release agents herein are relatively stable to hydrolysis. This is well illustrated by the fact that granular salts, even when alkaline (e.g., sodium tripolyphosphate), coated with the dry form of the soil release agents provided herein, provide an excellent vehicle for incorporating same into a granular detergent composition.

The following examples illustrate typical laundry detergent compositions which employ the soil release agents of the present invention at concentrations of from at least about 0.05%, typically up to about 3%, preferably about 0.3% to about 1%, by weight. In Examples 7 and 8, the abbreviation "TMS/TDS" refers to the tartrate monosuccinate/tartrate disuccinate builder prepared in the manner described in U.S. Patent 4,663,071, above.

### EXAMPLE 6

A heavy duty liquid composition of the present invention is as follows:

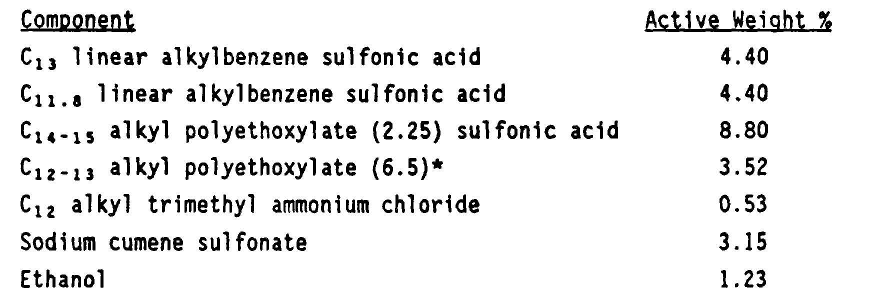

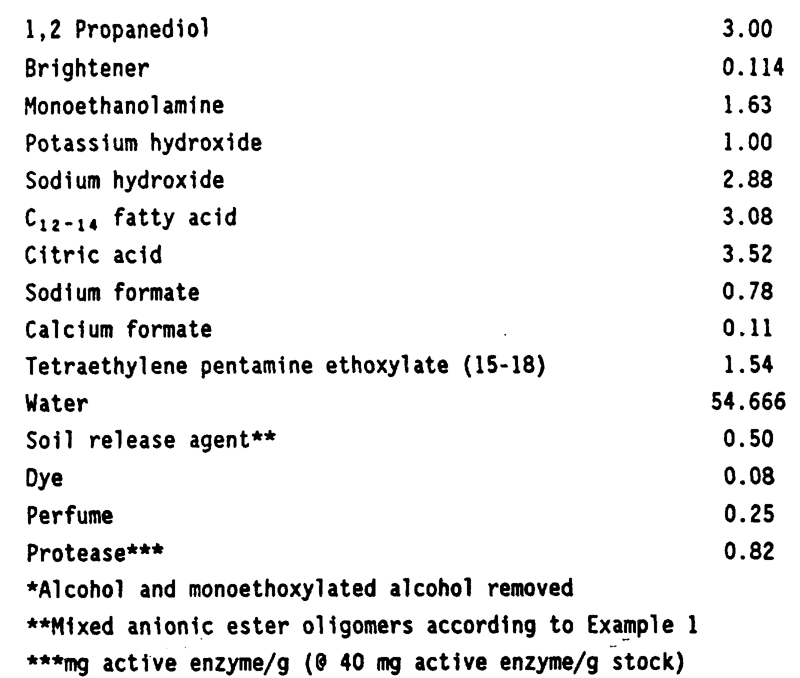

The ingredients listed above are added to a mixing tank with a single agitator in the order which they appear below. Before addition of dye, perfume, and proteolytic enzyme, the pH of the mixture is adjusted such that a 10% by weight solution in water has a pH of about 8.5.

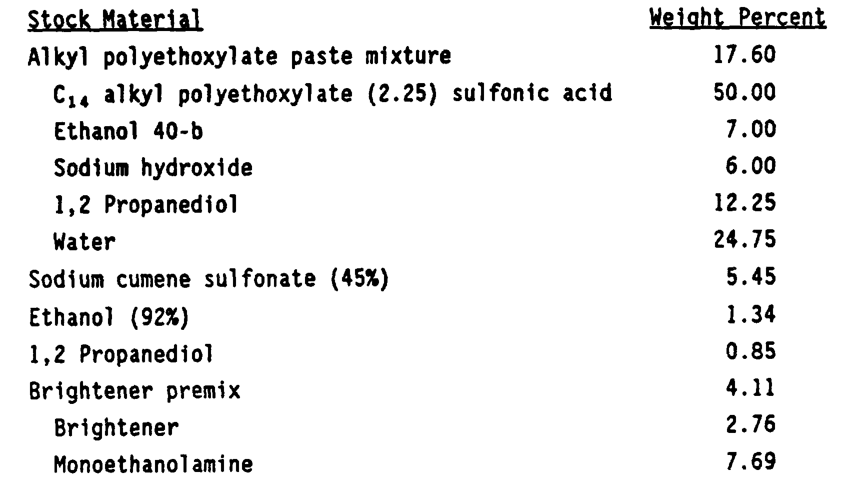

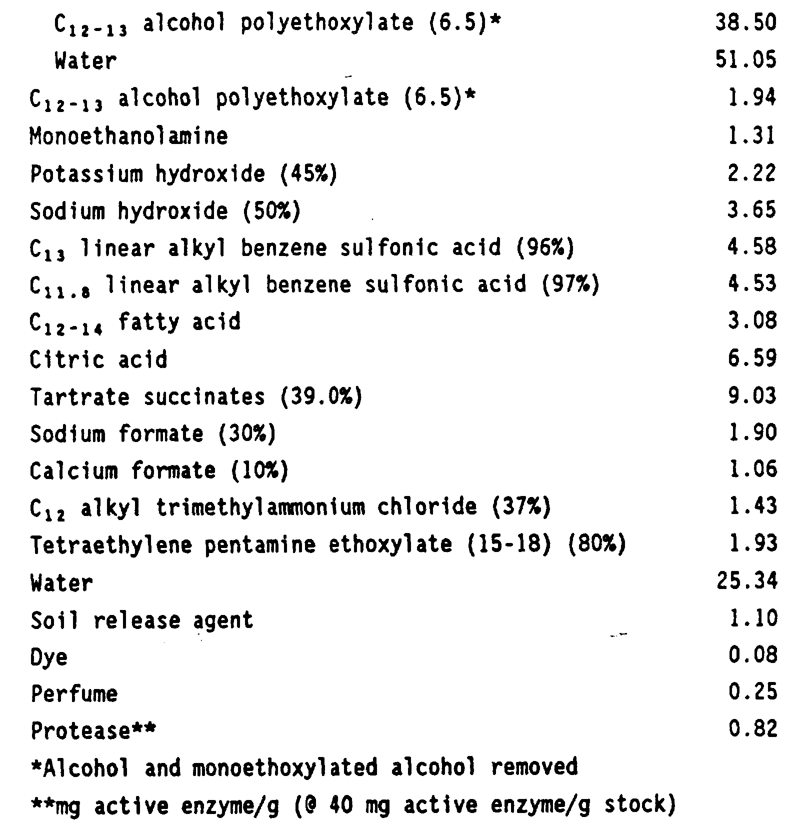

The above formula is clear, stable, and homogeneous.

### EXAMPLE 7

A granular detergent composition for household laundry use is as follows:

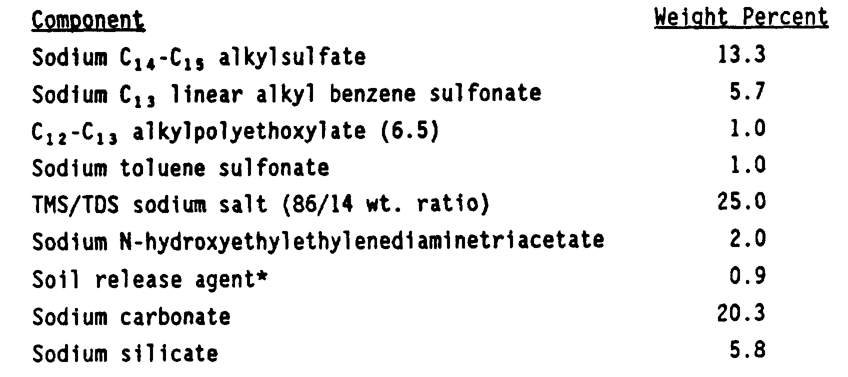

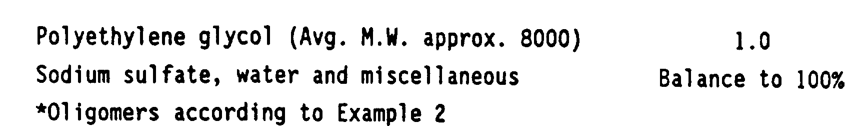

The components other than the Soil Release Agent are added together with continuous mixing with sufficient extra water (about 40% total) to form an aqueous slurry which is then spray dried; the Soil Release Agent is then admixed in dry form to complete the composition.

In the composition of Example 7, the following substitutions can be made:
(a) for TMS/TDS:
   (1) an equivalent amount of TMS alone, and
   (2) an equivalent amount of TDS alone.

### EXAMPLE 8

A liquid detergent composition for household laundry use is prepared by mixing the following ingredients:

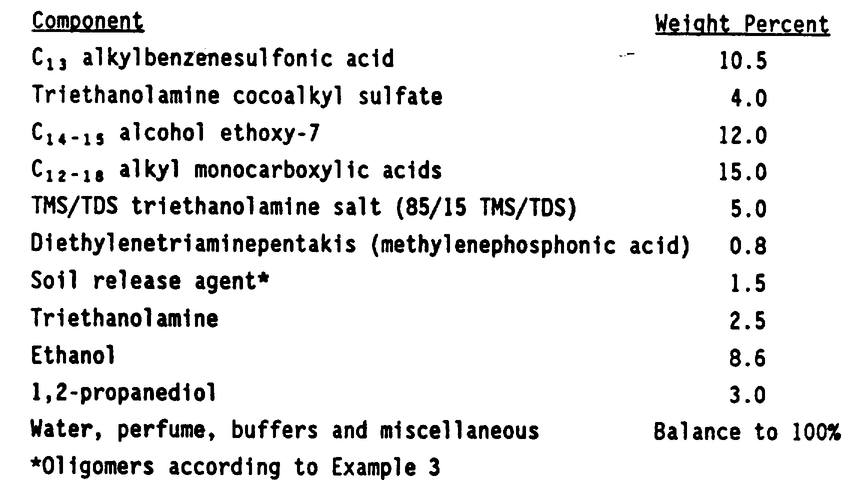

### EXAMPLE 9

The composition of Example 8 is prepared, but with the substitution of an equivalent amount of sodium 2,2′-oxodisuccinate for the TMS/TDS.

## Claims

1. A sulfonated oligomeric ester composition, characterized in that it comprises the sulfonated product of a preformed, substantially linear ester oligomer containing, per mole,
(a) from 1 mole to 2 moles, of terminal units characterized in that they are olefinically unsaturated; said terminal units being allyl or methallyl,
(b) from 1 mole to 4 moles, of nonionic hydrophile units, further characterized in that they are poly(oxyalkylene)oxy units and in that 100% by weight of any such unit is derived from ethylene oxide;
(c) from 1.1 moles to 20 moles, of repeat units characterized in that they are aryldicarbonyl repeat units, and in that 50% by weight or more, are terephthaloyl ; and
(d) from 0.1 moles to 19 moles, of repeat units characterized in that they are oxyalkyleneoxy repeat units derived from a diol component selected from C₄ glycols, 1,2-propylene glycol or a mixture of ethylene glycol and 1,2-propylene glycol : and mixtures thereof. said sulfonated product further being characterized in that it is sulfonated to the extent of chemically modifying the terminal units, (a), by:
(e) from 2 to 4 moles, of terminal unit substituent groups of formula -SOₓM wherein x is 2 or 3 and M is a conventional water-soluble cation, preferably sodium or potassium.

2. A sulfonated oligomeric ester composition according to Claim 1 which is further characterized in that it consists of the sulfonated product of said preformed, substantially linear ester oligomer wherein the preformed, substantially linear ester oligomer is the product of transesterifying and oligomerizing a mixture of (I) ethoxylated allyl alcohol, (II) 2 to 7 moles dimethyl terephthalate and (III) 1,2-propylene glycol or mixture thereof with ethylene glycol in a molar amount exceeding the molar amount of dimethylterephthalate; and wherein the sulfonated product is produced by sulfonating the preformed, substantially linear ester oligomer, whereby the sulfonated terminal substituent groups (e) are introduced.

3. A sulfonated oligomeric ester composition according to either Claim 1 or Claim 2 which is further characterized in that it comprises the sulfonated product of said preformed, substantially linear ester oligomer wherein the preformed, substantially linear ester oligomer is made by
a step of transesterification, characterized in that it comprises reacting a mixture of (I) ethoxylated allyl alcohol, ; (II) 2 to 7 moles dimethyl terephthalate and (III) 2 to 14 moles 1,2-propylene glycol or mixture thereof with ethylene glycol, provided that the number of moles of glycol exceeds the number of moles of dimethyl terephthalate; (I)-(III) being reacted in the presence of a conventional transesterification catalyst at a transesterification temperature of 120 °C to 250 °C, at a transesterification pressure of 0.75 atm. to 3 atm., for a transesterification time of from 2 hrs. to 60 hrs.,; followed by
a step of oligomorization, characterized in that it comprises further reacting the mixture resulting from said transesterification at an oligomerization temperature of from 170 °C to 250 °C, at an oligomerization pressure in the range from 1 x 10⁻⁶ atm. to 0.5 atm., for an oligomerization time of from about 2 hrs. to 60 hrs., whereby methanol and the excess of glycol are removed, and
whereby said preformed, substantially linear ester oligomer is achieved in a sulfonation-ready form.

4. A sulfonated oligomeric ester composition according to any of the preceding Claims, further characterized in that the sulfur-containing units (e) are produced by a radical-initiated olefin sulfonation reaction having at least one step of sulfonating said preformed, substantially linear ester oligomer, in the presence of water, with a low temperature, free-radical sulfonation initiator, and a conventional bisulfite sulfonating reagent, preferably sodium bisulfite; and wherein the sulfonation reaction is further characterized in that the reactants are effectively cocontacted in an aqueous reaction mixture, the level of said conventional bisulfite sulfonating agent is from 1 mole to 4 moles per mole of said preformed, substantially linear ester oligomer and the following sulfonation conditions are respected: sulfonation temperature: 0°C to 100°C, sulfonation pressure: 0.5 atm. to 3 atm.,; and sulfonation time period: 0.1 hrs. to 90 hrs;.

5. A sulfonated oligomeric ester composition according to any of the preceding Claims, further characterized in that it results from a process having transesterification, oligomerization and sulfonation steps together with an additional step of oxidizing said terminal unit substituent groups of formula -SOₓM wherein x is 2 and concurrently increasing the proportion of said terminal unit substituent groups of formula -SOₓM wherein x is 3, preferably by means of hydrogen peroxide.

6. The sodium salt form of a sulfonated oligomeric ester, according to any of Claims 1-5, characterized in that it consists essentially of
(i) a substantially linear oligomeric ester backbone, which is comprised of from 85% to 100% by weight of terephthaloyl and oxy-1,2.propyleneoxy repeat units;
and
(ii) terminal moieties covalently attached to said backone; wherein said terminal moieties are comprised of from 70% to 100% of moieties selected from the group consisting of:
-(Eₙ)-(CH₂-CH{SO₃Na}-CH₂{SO₃Na}),
-(Eₙ)-(CH₂-CH{SO₂Na}-CH₂{SO₃Na}),
and
-(Eₙ)-(CH₂-CH₂-CH₂{SO₃Na});
wherein (Eₙ) is poly(oxyethylene)oxy and n is from 8 to 20 and the end-cap moieties -(CH₂-CH{SO₃Na}-CH₂{SO₃Na}), -(CH₂-CH{SO₂Na}-CH₂{SO₃Na}) and -(CH₂-CH₂-CH₂{SO₃Na}) are from 5% to 40%, by weight of the total cowposition; and wherein the mole ratio of the doubly sulfonated end-cap moieties: -(CH₂-CH{SO₃Na}-CH₂{SO₃Na}) and -(CH₂-CH{SO₂Na}-CH₂{SO₃Na}) in relation to the singly sulfonated end-cap moieties: -(CH₂-CH₂-CH₂{SO₃Na}), is in the range from 1:5 to 1:0,

7. The sodium salt of a sulfonated oligomeric ester according to Claim 6 wherein the end cap moieties -(CH₂-CH{SO₃Na}-CH₂{SO₃Na}), -(CH₂-CH{SO₂Na}-CH₂{SO₃Na}) and -(CH₂-CH₂-CH₂{SO₃Na}) comprise from 5% to 30% by weight of the total composition and wherein the ratio of doubly sulfonated end-cap moieties -(CH₂-CH{SO₃Na}-CH₂{SO₃Na}) and -(CH₂-CH{SO₂Na}-CH₂{SO₃Na})in relation to singly sulfonated end-cap moieties -CH₂-CH₂-CH₂{SO₃Na}) is in the range from 5:1 to 1:0.

8. In a process for preparing sulfonated ester compositions useful as functional materials, especially soil release agents, in detergent compositions, wherein the process has at least one ester-bond forming procedure and at least one sulfonation procedure, the improvement whereby a particular terminally sulfonated, substantially linear co-oligomeric ester composition is secured as product without reliance upon a chlorinated compound and without reliance upon a procedure having a sulfonation step followed by an ethoxylation step; said improvement being characterized by the ordered sequence of:
a) in an ester-bond forming procedure,
a transesterification step, comprising reacting a mixture of
I) 2 moles of allyl alcohol ethoxylate 8 - 20;
II) 2 to 7 moles of dimethyl terephthalate;
and
III) 2 to 14 moles of a C₂-C₄ glycol;
the reactants (I)-(III) being transesterified in the presence of a conventional transesterification catalyst at a transesterification temperature of 120 ^{o}C to 250 ^{o}C , at a transesterification pressure of 0.75 atm. to 3 atm., for a transesterification time of 2 hrs. to 60 hrs.;
followed by an oligomerization step comprising further reacting the transesterified mixture at an oligomerization temperature of 170 ^{o}C to 250 ^{o}C, at an oligomerization pressure of 1 x 10 ⁻⁶ atm. to 0.5 atm., for an oligomerization time of 2 hrs. to 60 hrs.;
thereby producing an allyl end-capped co-oligomeric ester precursor;
and
b) in a radical-initiated olefin sulfonation procedure, at least one step of sulfonating said allyl end-capped co-oligomeric ester precursor, in the presence of water, with a low temperature, free-radical sulfonation initiator and a conventional bisulfite sulfonating reagent;
wherein the reactants are effectively cocontacted in an aqueous reaction mixture and wherein the level of said conventional bisulfite sulfonating agent is 1 mole to 4 moles per mole of said allyl end-capped co-oligomeric ester precursor and wherein the following sulfonation conditions are respected:
sulfonation temperature: 0°C to 100°C; sulfonation pressure: 0.5 atm. to 3 atm.,; and sulfonation time period: 0.1 hrs. to 90 hrs.

9. A detergent composition, preferably in the form of a built laundry detergent, comprising at least about 0.05% by weight of a sulfonated oligomeric ester composition according to any of the preceding Claims.

10. A built laundry detergent composition in accordance with Claim 9, which is further characterized in that it contains from about 5% to about 50% by weight of a detersive surfactant and from about 5% to about 60% by weight of detergency builder,

11. A built liquid laundry detergent composition in accordance with either of Claims 9 and 10 wherein the builder is a polycarboxylate further characterized in that it is comprised of one or more of: oxodisuccinate salts, tartrate monosuccinate salts, tartrate disuccinate salts, and mixtures thereof; and wherein the detersive surfactant is further characterized in that it is a conventional anionic surfactant, nonionic surfactant or mixture thereof.

12. A sulphonated oligomeric ester composition according to Claim 1, wherein said sulphonated product of a performed substantially linear ester oligomer comprises:
(a) 2 moles of terminal allyl units
(b) 2 moles of said nonionic hydrophile units, said unit being (OCH₂CH₂)₄₋₃₀O
(c) 2 to 7 moles of said aryldicarbonyl repeat units comprising 80% to 100% terephthaloyl and
(d) 2 to 14 moles of said oxyalkyleneoxy repeat units selected from 1,2 propylene glycol, ethylene glycol or a mixture thereof, wherein the ratio of ethylene glycol to 1,2 propylene glycol mole ratio is from 0:1 to 0.9:0.1
(e) 4 moles of said terminal unit substituent groups of formula -SOₓM

## Patentansprüche

1. Sulfonierte oligomere Esterzusammensetzung, **dadurch gekennzeichnet**, daß sie das sulfonierte Produkt eines vorgebildeten, im wesentlichen linearen Esteroligomeren umfaßt, enthaltend, pro Mol,
(a) 1 Mol bis 2 Mole endständiger Einheiten, die dadurch charakterisiert sind, daß sie olefinisch ungesättigt sind; wobei die endständigen Einheiten Allyl oder Methallyl sind;
(b) 1 Mol bis 4 Mole nichtionische, hydrophile Einheiten, die weiterhin dadurch charakterisiert sind, daß sie Poly(oxyalkylen)oxyeinheiten sind und daß 100 Gew.-%jeder dieser Einheit von Ethylenoxid abgeleitet ist;
(c) 1,1 Mole bis 20 Mole wiederkehrende Einheiten, die dadurch charakterisiert sind, daß sie wiederkehrende Aryldicarbonyleinheiten sind und daß 50 Gew.-% oder mehr Terephthaloyl sind; und
(d) 0,1 Mole bis 19 Mole wiederkehrende Einheiten, die dadurch charakterisiert sind, daß sie wiederkehrende Oxyalkylenoxyeinheiten sind, die aus einer Diolkomponente abgeleitet sind, welche aus der C₄-Glykole, 1,2-Propylenglykol oder einer Mischung aus Ethylenglykol und 1,2-Propylenglykol und Mischungen hiervon umfassenden Gruppe gewählt ist,
wobei das sulfonierte Produkt weiterhin dadurch charakterisiert ist, daß es bis zu dem Ausmaß der chemischen Modifizierung der endständigen Einheiten (a) sulfoniert ist durch:
(e) 2 bis 4 Mole Endeinheiten-Substituentengruppen der Formel -SOₓM, worin x 2 oder 3 ist und M ein herkömmliches wasserlösliches Kation, vorzugsweise Natrium oder Kalium ist.

2. Sulfonierte oligomere Esterzusammensetzung nach Anspruch 1, die weiterhin **dadurch gekennzeichnet** ist, daß sie aus dem sulfonierten Produkt des vorgebildeten, im wesentlichen linearen Esteroligomeren besteht, wobei das vorgebildete, im wesentlichen lineare Esteroligomer das Produkt der Umesterung und Oligomerisierung einer Mischung aus (I) ethoxyliertem Allylalkohol, (II) 2 bis 7 Molen Dimethylterephthalat und (III) 1,2-Propylenglykol oder einer Mischung hiervon mit Ethylenglykol in einer molaren Menge, welche die molare Menge von Dimethylterephthalat überschreitet, ist; und wobei das sulfonierte Produkt durch Sulfonieren des vorgebildeten, im wesentlichen linearen Esteroligomeren, wodurch die sulfonierten endständigen Substituentengruppen (e) eingeführt werden, hergestellt worden ist.

3. Sulfonierte oligomere Esterzusammensetzung nach Anspruch 1 oder Anspruch 2, welche weiterhin **dadurch gekennzeichnet** ist, daß sie das sulfonierte Produkt des vorgebildeten, im wesentlichen linearen Esteroligomeren umfaßt, wobei das vorgebildete, im wesentlichen lineare Esteroligomere hergestellt wird durch
einen Umesterungsschritt, dadurch charakterisiert, daß er die Umsetzung einer Mischung aus (I) ethoxyliertem Allylakohol, (II) 2 bis 7 Molen Dimethylterephthalat und (III) 2 bis 14 Molen 1,2-Propylenglykol oder einer Mischung hiervon mit Ethylenglykol umfaßt, mit der Maßgabe, daß die Anzahl der Mole an Glykol die Anzahl der Mole an Dimethylterephthalat überschreitet; wobei (I)-(III) in Gegenwart eines herkömmlichen Umesterungskatalysators bei einer Umesterungstemperatur von 120°C bis 250°C bei einem Umesterungsdruck von 0.75 atm bis 3 atm während einer Umesterungszeit von 2 Stunden bis 60 Stunden umgesetzt werden; gefolgt von einem
Oligomerisationsschritt, dadurch charakterisiert, daß er das weitere Umsetzen der aus der Umesterung resultierenden Mischung bei einer Oligomerisationstemperatur von 170°C bis 250°C bei einem Oligomerisationsdruck im Bereich von 1 x 10⁻⁶ atm bis 0.5 atm während einer Oligomerisationszeit von etwa 2 Stunden bis 60 Stunden umfaßt, wodurch Methanol und der Überschuß an Glykol entfernt werden, und
wobei das vorgebildete, im wesentlichen lineare Esteroligomer in einer zur Sulfonierung bereiten Form erzielt wird.

4. Sulfonierte oligomere Esterzusammensetzung nach mindestens einem der vorangehenden Ansprüche, weiterhin **dadurch gekennzeichnet**, daß die Schwefel enthaltenden Einheiten (e) durch eine Radikal-initiierte Olefin-Sulfonierungsreaktion hergestellt werden, mit mindestens einem Schritt des Sulfonierens des vorgebildeten, im wesentlichen linearen Esteroligomeren in Gegenwart von Wasser, mit einem Niedertemperatur-Freiradikal-Sulfonierungsinitiator und einem herkömmlichen Bisulfit-Sulfonierungsreagens, vorzugsweise Natriumbisulfit: und wobei die Sulfonierungsreaktion weiterhin dadurch charakterisiert ist, daß die Reaktanten in wirksamer Weise in einer wäßrigen Reaktionsmischung miteinander in Berührung gebracht werden, wobei der Anteil des herkömmlichen Bisulfit-Sulfonierungsmittels 1 Mol bis 4 Mole pro Mol des vorgebildeten, im wesentlichen linearen Esteroligomeren beträgt und die folgenden Sulfonierungsbedingungen respektiert werden: Sulfonierungstemperatur: 0°C bis 100°C, Sulfonierungsdruck: 0,5 atm bis 3 atm; und Sulfonierungszeitraum: 0,1 h bis 90 h.

5. Sulfonierte oligomere Esterzusammensetzung nach mindestens einem der vorangehenden Ansprüche, weiterhin **dadurch gekennzeichnet**, daß sie aus einem Verfahren mit Umesterungs-, Oligomerisierungs- und Sulfonierungsschritten zusammen mit einem zusätzlichen Schritt des Oxidierens der Endeinheiten-Substituentengruppen der Formel -SOₓM, worin x 2 ist und des gleichzeitigen Erhöhens des Anteils der Endeinheiten-Substituentengruppen der Formel -SOₓM, worin x 3 ist, vorzugsweise mittels Wasserstoffperoxid, resultiert.

6. Natriumsalzform eines sulfonierten oligomeren Esters gemäß mindestens einem der Ansprüche 1-5, **dadurch gekennzeichnet**, daß sie im wesentlichen besteht aus
(1) einem im wesentlichen linearen oligomeren Ester-Grundgerüst, welches 85 bis 100 Gew. -% Terephthaloyl- und wiederkehrende Oxy-1.2-propylenoxyeinheiten umfaßt; und
(ii) endständigen Gruppen, welche kovalent an das Grundgerüst gebunden sind; wobei die endständigen Gruppen 70 % bis 100 % Gruppen, gewählt aus der
-(Eₙ)-(CH₂-CH{SO₃Na}-CH₂{SO₃Na}),
-(Eₙ)-(CH₂-CH{SO₂Na}-CH₂{SO₃Na}),
und
-(Eₙ)-(CH₂-CH₂-CH₂{SO₃Na}):
umfassenden Gruppe umfassen, worin (Eₙ) Poly(oxyethylen)oxy ist und n 8 bis 20 ist und die Endkappengruppen -(CH₂)-CH{SO₃Na}-CH₂{SO₃Na}), -(CH₂-CH{SO₂Na}-CH₂{SO₃Na}) und -(CH₂-CH₂-CH₂{SO₃Na}) 5 bis 40 Gew.-% der gesamten Zusammensetzung ausmachen: und wobei das Molverhältnis der doppelt sulfonierten Endkappengruppen: -(CH₂-CH{SO₃Na}-CH₂{SO₃Na}) und -(CH₂-CH{SO₂Na}-CH₂{SO₃Na}) in bezug auf die einfach sulfonierten Endkappengruppen -(CH₂-CH₂-CH{SO₃Na}) im Bereich von 1:5 bis 1:0 liegt.

7. Natriumsalz eines sulfonierten oligomeren Esters gemäß Anspruch 6, wobei die Endkappengruppen -(CH₂-CH{SO₃Na}-CH₂{SO₃Na}), -(CH₂-CH{SO₂Na}-CH₂{SO₃Na}) und -(CH₂-CH₂-CH₂{SO₃Na}) 5 bis 30 Gew.-% der gesamten Zusammensetzung umfassen und wobei das Verhältnis der doppelt sulfonierten Endkappengruppen -(CH₂-CH{SO₃Na}-CH₂{SO₃Na}) und -(CH₂-CH{SO₂Na}-CH₂{SO₃Na}) in bezug auf die einfach sulfonierten Endkappengruppen -(CH₂-CH₂-CH₂{SO₃Na}) im Bereich von 5:1 bis 1:0 liegt.

8. Verfahren zur Herstellung sulfonierter Esterzusammensetzungen, die als funktionelle Materialien, insbesondere Schmutzabweisungsmittel, in Waschmittelzusammensetzungen brauchbar sind, wobei das Verfahren mindestens einen Esterbindung-bildenden Arbeitsgang und mindestens einen Sulfonierungs-Arbeitsgang beinhaltet, mit der Verbesserung, daß eine bestimmte endständig sulfonierte, im wesentlichen lineare, cooligomere Esterzusammensetzung als Produkt gesichert wird, ohne auf eine chlorierte Verbindung zurückzugreifen und ohne auf eine Arbeitsweise mit einem Sulfonierungsschritt, gefolgt von einem Ethoxylierungsschritt, zurückzugreifen; wobei die Verbesserung charakterisiert ist durch die aufeinanderfolgende Abfolge von:
(a) bei einem Esterbindungs-bildenden Arbeitsgang,
eines Umesterungsschrittes, umfassend das Umsetzen einer Mlschung aus
(I) 2 Molen Allylalkoholethoxylat 8-20;
(II) 2 bis 7 Molen Dimethylterephthalat; und
(III) 2 bis 14 Molen C₂-C₄-Glykol;
wobei die Reaktanten (I) - (III) in Gegenwart eines herkömmlichen Umesterungskatalysators bei einer Umesterungstemperatur von 120 bis 250°C bei einem Umesterungsdruck von 0.75 atm bis 3 atm während einer Umesterungszeit von 2 h bis 60 h umgeestert werden; gefolgt von einem Oligomerisierungsschntt, umfassend weiterhin das Umsetzen der umgeesterten Mischung bei einer Oligomerisierungstemperatur von 170 bis 250°C bei einem Oligomerisierungsdruck von 1 x 10⁻⁶ atm bis 0,5 atm während einer Oligomerisierungszeit von 2 h bis 60 h;
wodurch ein cooligomerer Estervorläufer mit Allyl-Endkappen erzeugt wird; und
(b) bei einem Radikal-initilerten Olefin-Sulfonierungs-Arbeitsgang, mindestens eines Schrittes des Sulfonierens des cooligomeren Estervorläufers mit Allyl-Endkappen in Gegenwart von Wasser mit einem Niedertemperatur-Freiradikal-Sulfonierungsinitiator und einem herkömmlichen Bisulfit-Sulfonierungsreagens; wobei die Reaktanten in einer wäßrigen Reaktionsmischung in wirksamer Weise miteinander in Berührung gebracht werden und wobei der Anteil des herkömmlichen Bisulfit-Sulfonierungsmittels 1 bis 4 Mole pro Mol des cooligomeren Estervorläufers mit Allyl-Endkappen beträgt und wobei die folgenden Sulfonierungsbedingungen respektiert werden:
Sulfonierungstemperatur: 0°C bis 100°C; Sulfonierungsdruck: 0,5 atm bis 3 atm; und Sulfonierungszeitraum: 0,1 h bis 90 h.

9. Waschmittelzusammensetzung, vorzugsweise in Form eines builderhaltigen Wäschewaschmittels, umfassend mindestens etwa 0,05 Gew.-% einer sulfonierten oligomeren Esterzusammensetzung nach mindestens einem der vorangehenden Ansprüche.

10. Builderhaltige Wäschewaschmittelzusammensetzung gemäß Anspruch 9, die weiterhin **dadurch gekennzeichnet** ist, daß sie etwa 5 bis etwa 50 Gew.-% eines Waschtensids und etwa 5 bis etwa 60 Gew. -% eines Waschmittelbuilders enthält.

11. Builderhaltige, flüssige Wäschewaschmittelzusammensetzung nach Anspruch 9 oder 10, wobei der Builder ein Polycarboxylat ist, weiterhin dadurch charakterisiert, daß er eines oder mehrere aus folgenden umfaßt: Oxodisuccinatsalze. Tartratmonosuccinatsalze, Tartratdisuccinatsalze und Mischungen hiervon; und wobei das Waschtensid weiterhin dadurch charakterisiert ist, daß es ein herkömmliches anionisches Tensid, nichtionisches Tensid oder eine Mischung hiervon ist.

12. Sulfonierte oligomere Esterzusammensetzung nach Anspruch 1, wobei das sulfonierte Produkt aus einem vorgebildeten, im wesentlichen linearen Esteroligomeren
(a) 2 Mole endständige Allyeinheiten;
(b) 2 Mole der nichtionischen hydrophilen Einheiten, wobei die Einheit (OCH₂CH₂)₄₋₃₀O ist;
(c) 2 bis 7 Mole der wiederkehrenden Aryldicarbonyleinheiten, welche 80 bis 100 % Terephthaloyl umfassen, und
(d) 2 bis 14 Mole der wiederkehrenden Oxyalkylenoxyeinheiten, gewählt aus 1,2-Propylenglykol, Ethylenglykol oder einer Mischung hiervon, wobei das Molverhältnis von Ethylenglykol zu 1,2-Propylenglykol 0:1 bis 0.9:0.1 beträgt;
(e) 4 Mole der Endeinheiten-Substituentengruppen der Formel -SOₓM
umfaßt.

## Revendications

1. Composition d'ester oligomère sulfoné, caractérisée en ce qu'elle comprend le produit sulfoné d'un oligomère ester essentiellement linéaire, préformé, contenant, par mole,
(a) de 1 mole à 2 moles de motifs terminaux caractérisés en ce qu'ils sont à insaturation oléfinique; lesdits motifs terminaux étant des groupes allyle ou méthallyle;
(b) de 1 mole à 4 moles de motifs hydrophiles non ioniques, caractérisés en outre en ce que ce sont des motifs poly(oxyalkylène)oxy et en ce que 100% en poids de l'un quelconque de ces motifs est dérivé d'oxyde d'éthylène;
(c) de 1,1 moles à 20 moles de motifs récurrents caractérisés en ce que ce sont des motifs récurrents aryldicarbonyle et en ce que 50% en poids, ou plus, sont des motifs téréphtaloyle; et
(d) de 0,1 mole à 19 moles de motifs récurrents caractérisés en ce que ce sont des motifs récurrents oxyalkylèneoxy dérivés d'un constituant diol choisi parmi les glycols en C₄, le 1,2-propylèneglycol, ou un mélange d'éthylèneglycol et de 1,2-propylèneglycol, et des mélanges de ceux-ci, ledit produit sulfoné étant en outre caractérisé en ce qu'il est sulfoné à un degré se traduisant par la modification chimique des motifs terminaux (a) par:
(e) de 2 à 4 moles de groupes substituants des motifs terminaux de formule -SOₓM, dans laquelle x est égal à 2 ou 3 et M est un cation hydrosoluble classique, de préférence le sodium ou le potassium.

2. Composition d'ester oligomère sulfoné selon la revendication 1, caractérisée en outre en ce qu'elle est constituée du produit sulfoné dudit oligomère ester essentiellement linéaire, préformé, l'oligomère ester essentiellement linéaire, préformé, étant le produit de transestérification et d'oligomérisation d'un mélange (I) d'alcool allylique éthoxylé, (II) de 2 à 7 moles de téréphtalate de diméthyle et (III) de 1,2-propylèneglycol, ou d'un mélange de ce dernier avec de l'éthylèneglycol, dans une proportion molaire dépassant la proportion molaire du téréphtalate de diméthyle; et le produit sulfoné étant produit par sulfonation de l'oligomère ester essentiellement linéaire, préformé, ce qui permet d'introduire les groupes substituants terminaux sulfonés (e).

3. Composition d'ester oligomère sulfoné selon la revendication 1 ou la revendication 2, caractérisée en outre en ce qu'elle comprend le produit sulfoné dudit oligomère ester essentiellement linéaire, préformé, l'oligomère ester essentiellement linéaire, préformé, étant préparé par
une étape de transestérification, caractérisée en ce qu'elle comprend la réaction d'un mélange (I) d'alcool allylique éthoxylé, (II) de 2 à 7 moles de téréphtalate de diméthyle et (III) de 2 à 14 moles de 1,2-propylèneglycol, ou d'un mélange de ce dernier avec de l'éthylèneglycol, à condition que le nombre de moles de glycol dépasse le nombre de moles de téréphtalate de diméthyle; (I)-(III) étant mis à réagir en présence d'un catalyseur de transestérification classique, à une température de transestérification de 120°C à 250°C, sous une pression de transestérification de 0,75 atm à 3 atm, pendant une durée de transestérification de 2 heures à 60 heures; suivie par
une étape d'oligomérisation, caractérisée en ce qu'elle comprend la réaction ultérieure du mélange résultant de ladite transestérification, à une température d'oligomérisation de 170°C à 250°C, sous une pression d'oligomérisation dans la gamme de 1 x 10⁻⁶ atm à 0,5 atm, pendant une durée d'oligomérisation d'environ 2 heures à 60 heures, éliminant ainsi le méthanol et l'excès de glycol, et
ce qui permet d'obtenir ledit oligomère ester essentiellement linéaire, préformé, sous une forme prête pour la sulfonation.

4. Composition d'ester oligomère sulfoné selon l'une quelconque des revendications précédentes, caractérisée en outre en ce que les motifs soufrés (e) sont produits par une réaction de sulfonation d'oléfines à initiateur radicalaire, possédant au moins une étape de sulfonation dudit oligomère ester essentiellement linéaire, préformé, en présence d'eau, avec un initiateur de sulfonation radicalaire à basse température et un réactif de sulfonation bisulfite classique, de préférence le bisulfite de sodium; et la réaction de sulfonation étant en outre caractérisée en ce que les réactifs sont mis en contact efficacement dans un mélange réactionnel aqueux, la proportion dudit agent de sulfonation bisulfite classique étant de 1 mole à 4 moles par mole dudit oligomère ester essentiellement linéaire, préformé, et les conditions de sulfonation suivantes étant respectées: température de sulfonation: 0°C à 100°C; pression de sulfonation: 0,5 atm à 3 atm; et durée de sulfonation: 0,1 heure à 90 heures.

5. Composition d'ester oligomère sulfoné selon l'une quelconque des revendications précédentes, caractérisée en outre en ce qu'elle résulte d'un procédé présentant des étapes de transestérification, d'oligomérisation et de sulfonation, ainsi qu'une étape supplémentaire d'oxydation desdits groupes substituants des motifs terminaux de formule -SOₓM, dans laquelle x est égal à 2, et en même temps d'augmentation de la proportion desdits groupes substituants des motifs terminaux de formule -SOₓM, dans laquelle x est égal à 3, de préférence au moyen de peroxyde d'hydrogène.

6. Sel de sodium d'un ester oligomère sulfoné selon l'une quelconque des revendications 1-5, caractérisé en ce qu'il est essentiellement constitué
(i) d'une chaîne principale ester oligomère essentiellement linéaire, qui est constituée de 85% à 100% en poids de motifs récurrents téréphtaloyle et oxy-1,2-propylèneoxy; et
(il) de groupements terminaux liés par covalence à ladite chaîne principale; lesdits groupements terminaux étant constitués de 70% à 100% de groupements choisis dans le groupe constitué par:
-(Eₙ)-(CH₂-CH{SO₃Na}-CH₂{SO₃Na}),
-(Eₙ)-(CH₂-CH{SO₂Na}-CH₂{SO₃Na})
et
-(Eₙ)-(CH₂-CH₂-CH₂{SO₃Na});
dans lesquels (Eₙ) représente un poly(oxyéthylène)oxy et n a une valeur de 8 à 20, et les groupements bloquant les extrémités -(CH₂-CH{SO₃Na}-CH₂{SO₃Na}), -(CH₂-CH{SO₂Na}-CH₂{SO₃Na}) et -(CH₂-CH₂-CH₂{SO₃Na}) représentent de 5% à 40% du poids de la composition totale; et dans lesquels le rapport molaire des groupements doublement sulfonés bloquant les extrémités -(CH₂-CH{SO₃Na}-CH₂{SO₃Na}) et -(CH₂-CH{SO₂Na} -CH₂{SO₃Na}) par rapport aux groupements monosulfonés bloquant les extrémités -(CH₂-CH₂-CH₂{SO₃Na}) est dans la gamme de 1:5 à 1:0.

7. Sel de sodium d'un ester oligomère sulfoné selon la revendication 6, dans lequel les groupements bloquant les extrémités -(CH₂-CH{SO₃Na}-CH₂{SO₃Na}), -(CH₂-CH{SO₂Na}-CH₂{SO₃Na}) et -(CH₂-CH₂-CH₂{SO₃Na}) représentent de 5% à 30% du poids de la composition totale; et dans lequel le rapport molaire des groupements doublement sulfonés bloquant les extrémités -(CH₂-CH{SO₃Na}-CH₂{SO₃Na}) et -(CH₂-CH{SO₂Na} -CH₂{SO₃Na}) par rapport aux groupements monosulfonés bloquant les extrémités -(CH₂-CH₂-CH₂{SO₃Na}) est dans la gamme de 5:1 à 1:0.

8. Dans un procédé de préparation de compositions d'ester sulfoné utiles comme substances fonctionnelles, en particulier comme agents de libération des salissures, dans des compositions détergentes, dans lequel le procédé présente au moins une opération de formation d'une liaison ester et au moins une opération de sulfonation, l'amélioration par laquelle une composition particulière d'ester co-oligomère essentiellement linéaire, sulfoné aux extrémités, est obtenue comme produit sans s'appuyer sur un composé chloré et sans s'appuyer sur une procédure ayant une étape de sulfonation suivie d'une étape d'éthoxylation; ladite amélioration étant caractérisée par la séquence dans l'ordre suivant:
a) dans une procédure de formation d'une liaison ester,
une étape de transestérification comprenant la réaction d'un mélange de
I) 2 moles d'alcool allylique éthoxylé 8-20;
II) 2 à 7 moles de téréphtalate de diméthyle;
et
III) 2 à 14 moles de glycol en C₂-C₄;
les réactifs (I)-(III) étant transestérifiés en présence d'un catalyseur de transestérification classique, à une température de transestérification de 120°C à 250°C, sous une pression de transestérification de 0,75 atm à 3 atm, pendant une durée de transestérification de 2 heures à 60 heures;
suivie par une étape d'oligomérisation, comprenant la réaction ultérieure du mélange résultant de la transestérification, à une température d'oligomérisation de 170°C à 250°C, sous une pression d'oligomérisation de 1 x10⁻⁶ atm à 0,5 atm, pendant une durée d'oligomérisation de 2 heures à 60 heures;
pour produire un précurseur d'ester co-oligomère à extrémités allyliques bloquées;
et
b) dans une procédure de sulfonation d'oléfines à initiateur radicalaire,
au moins une étape de sulfonation dudit précurseur d'ester co-oligomère à extrémités allyliques bloquées, en présence d'eau, avec un initiateur de sulfonation radicalaire à basse température et un réactif de sulfonation bisulfite classique; dans laquelle les réactifs sont mis en contact efficacement dans un mélange réactionnel aqueux, la proportion dudit agent de sulfonation bisulfite classique étant de 1 mole à 4 moles par mole dudit précurseur d'ester co-oligomère à extrémités allyliques bloquées, et les conditions de sulfonation suivantes étant respectées: température de sulfonation: 0°C à 100°C; pression de sulfonation: 0,5 atm à 3 atm; et durée de sulfonation: 0,1 heure à 90 heures.

9. Composition détergente, de préférence sous forme d'un détergent de lessive avec adjuvant, comprenant au moins environ 0,05% en poids d'une composition d'ester oligomère sulfoné selon l'une quelconque des revendications précédentes.

10. Composition détergente de lessive avec adjuvant selon la revendication 9, caractérisée en outre en ce qu'elle contient d'environ 5% à environ 50% en poids d'un tensioactif détersif et d'environ 5% à environ 60% en poids d'adjuvant de détergence.

11. Composition détergente de lessive liquide avec adjuvant selon l'une quelconque des revendications 9 et 10, dans laquelle l'adjuvant est un polycarboxylate caractérisé en outre en ce qu'il est constitué d'un ou de plusieurs des composés: sels oxodisuccinates, sels tartrates monosuccinates, sels tartrates disuccinates, et leurs mélanges; et dans laquelle le tensioactif détersif est en outre caractérisé en ce qu'il s'agit d'un tensioactif anionique classique, d'un tensioactif non ionique classique, ou d'un mélange de ceux-ci.

12. Composition d'ester oligomère sulfoné selon la revendication 1, dans laquelle ledit produit sulfoné d'un oligomère ester essentiellement linéaire, préformé, comprend:
(a) 2 moles de motifs allyle terminaux
(b) 2 moles desdits motifs hydrophiles non ioniques, ledit motif étant (OCH₂CH₂)₄₋₃₀O
(c) 2 à 7 moles desdits motifs récurrents aryldicarbonyle comprenant 80% à 100% de téréphtaloyle et
(d) 2 à 14 moles desdits motifs récurrents oxyalkylèneoxy choisis parmi le 1,2-propylèneglycol, l'éthylèneglycol, ou un mélange de ceux-ci, le rapport molaire de l'éthylèneglycol au 1,2-propylèneglycol étant de 0:1 à 0,9:0,1
(e) 4 moles desdits groupes substituants des motifs terminaux de formule -SOₓM.
